# EUROPEAN PATENT APPLICATION

(11) **EP 4 632 265 A1**
(43) Date of publication of application: **15.10.2025**
(21) Application number: 23901097.8
(22) Date of filing: 06.12.2023
(51) Int. Cl.: F17C 5/06, F17C 5/00, F17C 13/02

(54) **USER-DRIVEN CONFIGURATION-BASED HYDROGEN FUELING METHOD AND DEVICE**

(30) Priority: 06.12.2022 KR 20220169130
(71) Applicant: Hyundai Motor Company, Seoul 06797 (KR); Kia Corporation, Seoul 06797 (KR); Industrial Academic Cooperation Foundation of Hoseo University, Asan-si, Chungcheongnam-do 31499 (KR)
(72) Inventor: PARK, Cheol Woo, Hwaseong-si, Gyeonggi-do 18280 (KR); CHUNG, Yong Ho, Asan-si, Chungcheongnam-do 31471 (KR); KIM, Heon Chang, Seongnam-si, Gyeonggi-do 13554 (KR)
(74) Representative: Hoffmann Eitle
(86) International application number: PCT/KR2023/020000
(87) International publication number: WO 2024/123079

(57) **Abstract**

A hydrogen fueling method for a mobility which uses hydrogen as fuel, according to the present disclosure, comprises the steps of: receiving a user input related to hydrogen fueling-target configurations; determining a target state of charge (SOC) for fueling the mobility with hydrogen, on the basis of the user input; and supplying the mobility with hydrogen by means of a hydrogen fueling control sequence for reaching the target SOC.

## Description

### TECHNICAL FIELD

The present disclosure relates to a control technology for hydrogen fueling/supply for a hydrogen fueled mobility and, more particularly, to a hydrogen fueling process enhancing an efficiency of the hydrogen fueling/supply and improving a speed and a real-time operability of the hydrogen fueling/supply, and a test platform for the process.

### BACKGROUND ART

The description in this section merely provides background information of embodiments of the present disclosure and is not intended to specify prior arts of the present disclosure.

A hydrogen fueled mobility, a hydrogen electric vehicle, or a fuel cell electric vehicle (FCEV) refers to a vehicle driven by electrical energy generated by a reaction of high-pressure hydrogen stored in the vehicle and oxygen in the air and producing little pollution.

The hydrogen fueled mobility is a concept including not only the hydrogen electric vehicle and the fuel cell electric vehicle employing a fuel cell system utilizing the hydrogen as an energy source but also another kind of mobilities employing an internal combustion engine (ICE) to generate power and being driven by the power generated by the ICE using the hydrogen as fuel.

As is known in the art, the hydrogen electric vehicle not only exhausts pure water (H2O) vapor in the course of generating the electricity but also removes ultrafine dusts in the air while being driven, and thus are attracting attention as a future eco-friendly mobility. Since the fuel, i.e. hydrogen, is abundant on earth and the energy production process is eco-friendly, the hydrogen electric vehicle is spotlighted as a technology with the potential to be utilized across industries.

The hydrogen electric vehicle produces electrical energy by supplying the high-pressure hydrogen stored safely in a hydrogen fuel storage tank and the oxygen introduced through an air supply system to a fuel cell stack and causing an electrochemical reaction between the hydrogen and the oxygen to occur. The electrical energy produced in the fuel cell stack is converted into kinetic energy through a motor to drive the hydrogen electric vehicle, and an operating hydrogen electric vehicle discharges only the pure water vapor through an exhaust port.

The fuel cell system provides power to the vehicle similarly to an engine in an internal combustion engine vehicle. A fuel cell, which is also referred to as a "tertiary battery," is a unit generating the electrical energy needed to drive the hydrogen electric vehicle. The fuel cell converts the chemical energy into the electrical energy through electrochemical reactions between the hydrogen and the oxygen. The electrical energy produced by the reactions originates from pure chemical reactions and does not produce any exhaust gases such as carbon dioxide unlike fossil fuels. Fuel cells are often categorized by the type of the fuel or an electrolyte. Leading fuel cell technologies may include a proton exchange membrane fuel cell (PEMFC), a solid oxide fuel cell (SOFC), and a molten carbonate fuel cell (MCFC). The components producing the electrical power using the fuel cells in the hydrogen electric vehicle includes the fuel cell stack, a hydrogen supply system, and an air supply system, and a thermal management system.

An efficient generation of the electrical energy in the fuel cell stack requires an assistance of the operation mechanism. Among several apparatuses in the operation mechanism, the hydrogen supply system plays a role of changing a pressure condition of the hydrogen safely stored in the hydrogen fuel storage tank from a high pressure to a low pressure and transfer to the fuel cell stack. In addition, the hydrogen supply system may increase a hydrogen supply efficiency by recirculating through a recirculation line.

A thermal management system may release heat generated while the fuel cell stack undergoes an electrochemical reaction to the outside and circulate cooling water to maintain a temperature of the fuel cell stack within a certain range. Thermal management system may affect the output and lifespan of the fuel cell stack.

A hydrogen fueled vehicle other than the hydrogen electric vehicle is also a vehicle that uses the hydrogen as the fuel. The hydrogen fueled car is driven by an electric motor which is rotated by heat generated by directly burning the hydrogen in the engine. The method of fueling/supplying the hydrogen for the hydrogen fueled car is not much different from the hydrogen fueling/supply method for the hydrogen electric vehicle.

The control scheme for fueling or supply hydrogen to the hydrogen fueled mobility aims to control the hydrogen fueling/supply such that a temperature (T) and pressure (P) of a compressed hydrogen storage system (CHSS) on the fuel cell side are maintained below a certain temperature limit and a pressure limit to ensure the safety.

The hydrogen fueling/supply process, the control scheme, and the protocol thereof in the conventional hydrogen electric vehicle had been stipulated before wired/wireless communications or computing techniques for the control became mature, and thus do not utilize the state-of-art information and communications technologies (ICT) to their full extent.

### DISCLOSURE OF INVENTION

### TECHNICAL PROBLEM

To solve the above problems, the present disclosure may provide a function of setting a fueling amount in response to a request of a user.

The present disclosure may provide a process and protocol for supporting a fueling amount setting function initiated by the user.

The present disclosure may provide a process for determining an appropriate fueling amount according to an environmental situation and conditions during a fueling and for fueling/supplying hydrogen.

The present disclosure may provide a protocol for bidirectional communications supporting the fueling amount setting function initiated by the user and the hydrogen fueling/supplying process.

### TECHNICAL SOLUTION

According to an aspect of an exemplary embodiment, the present disclosure provides a method of fueling hydrogen to a hydrogen fueled mobility based on user-driven setting. The method may include: receiving a user input related to setting a hydrogen fueling target; determining a target state of charge (SOC) for fueling hydrogen to the hydrogen fueled mobility based on the user input; and enabling/controlling the hydrogen fueled mobility to be supplied with hydrogen according to a hydrogen fueling control sequence for reaching the target SOC.

The user input may include the target SOC for fueling hydrogen to the hydrogen fueled mobility.

In determining the target SOC, the target SOC may be determined based on one or more of a current SOC of the hydrogen fueled mobility and/or fueling-related situation information of the hydrogen fueled mobility based on the user input.

The method may further include: acquiring or receiving progress data of a hydrogen fueling process for the hydrogen fueled mobility from an initial SOC to the target SOC; and transmitting the progress data for the hydrogen fueled mobility to a dispenser or a fueling control system supplying hydrogen to the hydrogen fueled mobility so that the progress data for the hydrogen fueled mobility may be monitored.

The operation of enabling/controlling the hydrogen fueled mobility to be supplied with hydrogen according to the hydrogen fueling control sequence for reaching the target SOC may include: an operation of generating a hydrogen fueling control request with respect to at least one intermediate SOC between an initial SOC and the target SOC.

According to another aspect of an exemplary embodiment, a method of fueling hydrogen to a hydrogen fueled mobility based on user-driven setting may include: receiving a user input related to setting a hydrogen fueling target; determining a target state of charge (SOC) for fueling hydrogen to the hydrogen fueled mobility based on the user input; and providing a hydrogen fueling control sequence for reaching the target SOC.

The user input may include the target SOC for fueling hydrogen to the hydrogen fueled mobility.

In determining the target SOC, the target SOC may be determined based on one or more of a current SOC of the hydrogen fueled mobility and/or fueling-related situation information of the hydrogen fueled mobility based on the user input.

The operation of providing the hydrogen fueling control sequence for reaching the target SOC may include an operation of determining a target hydrogen fueling control sequence corresponding to the target SOC from a group of hydrogen fueling control sequence candidates for reaching respective target SOCs.

The operation of providing the hydrogen fueling control sequence for reaching the target SOC may include an operation of predicting the hydrogen fueling control sequence for reaching the target SOC based on previous hydrogen fueling data between a dispenser supplying hydrogen to the hydrogen fueled mobility and the hydrogen fueled mobility.

The operation of providing the hydrogen fueling control sequence for reaching the target SOC may include an operation of generating a hydrogen fueling control command for fueling with respect to at least one intermediate SOC between the initial SOC and the target SOC.

The operation of providing the hydrogen fueling control sequence for reaching the target SOC may be performed using an artificial neural network configured to receive a first intermediate SOC among the at least one intermediate SOC and predict a hydrogen fueling control sequence for reaching a second intermediate SOC next to the first intermediate SOC.

The artificial neural network may be configured to receive the first intermediate SOC as input and generate a series of predicted future values of the hydrogen fueling control sequence for reaching the second intermediate SOC by means of a model predictive control technique.

The operation of providing the hydrogen fueling control sequence for reaching the target SOC may include an operation of providing the hydrogen fueling control sequence based on on-site data including relation data between the hydrogen fueling control command and a change in SOC during a process of reaching the target SOC from the initial SOC.

The method may further include: acquiring or receiving progress data of a hydrogen fueling process for the hydrogen fueled mobility from the dispenser supplying hydrogen to the hydrogen fueled mobility through bidirectional communications during the hydrogen fueling process from an initial SOC to the target SOC; and monitoring the hydrogen fueling process based on a result of a comparison between predicted data and the progress data from the initial SOC to the target SOC.

The method may further include: identifying or determining, through a communication with the hydrogen fueled mobility, whether the hydrogen fueled mobility is capable of being supplied with hydrogen.

The method may further include: acquiring or receiving the target SOC through a communication with the hydrogen fueled mobility; and providing the hydrogen fueled mobility with predicted data of the hydrogen fueling control sequence for reaching the target SOC.

The operation of determining the target SOC for fueling hydrogen to the hydrogen fueled mobility may include: when the user input includes a change of information related to setting the hydrogen fueling target, determining a new target SOC updated based on the user input and/or the change of the information.

The method may further include: providing the hydrogen fueled mobility with predicted data for an updated hydrogen fueling control sequence for reaching the new target SOC through a communication with the hydrogen fueled mobility.

According to an aspect of another exemplary embodiment, a hydrogen fueling apparatus arranged/mounted on a hydrogen fueled mobility to fuel hydrogen to the hydrogen fueled mobility based on user-driven setting may include: a memory storing at least one program instruction; and a processor executing the at least one program instruction.

The processor, when executing the at least one program instruction, is caused to: receive a user input related to setting a hydrogen fueling target; determine a target state of charge (SOC) for fueling hydrogen to the hydrogen fueled mobility based on the user input; and enable/control the hydrogen fueled mobility to be supplied with hydrogen according to a hydrogen fueling control sequence for reaching the target SOC.

The user input may include the target SOC for fueling hydrogen to the hydrogen fueled mobility.

The processor, when executing the at least one program instruction, may be further caused to: determine the target SOC based on one or more of a current SOC of the hydrogen fueled mobility and/or fueling-related situation information of the hydrogen fueled mobility according to the user input.

The processor may be further caused to acquire or receive progress data of a hydrogen fueling process for the hydrogen fueled mobility from an initial SOC to the target SOC.

The processor may be further caused to transmit the progress data for the hydrogen fueled mobility to a dispenser or a fueling control system supplying hydrogen to the hydrogen fueled mobility so that the progress data for the hydrogen fueled mobility may be monitored.

The processor may be further caused to generate a hydrogen fueling control request with respect to at least one intermediate SOC between an initial SOC and the target SOC.

According to an aspect of another exemplary embodiment, a dispenser fueling hydrogen to a hydrogen fueled mobility based on user-driven setting may include: a memory storing at least one program instruction; and a processor executing the at least one program instruction.

The processor, when executing the at least one program instruction, is caused to: receive a user input related to setting a hydrogen fueling target; determine a target state of charge (SOC) for fueling hydrogen to the hydrogen fueled mobility based on the user input; and provide a hydrogen fueling control sequence for reaching the target SOC.

The processor may be further caused to acquire or receive progress data of a hydrogen fueling process for the hydrogen fueled mobility from the dispenser supplying hydrogen to the hydrogen fueled mobility through bidirectional communications during the hydrogen fueling process from an initial SOC to the target SOC.

The processor may be further caused to monitor the hydrogen fueling process based on a result of a comparison between predicted data and the progress data from the initial SOC to the target SOC.

According to an aspect of another exemplary embodiment, a method of identifying/determining a first hydrogen fueling protocol for fueling hydrogen to a hydrogen fueled mobility based on user-driven setting may include: identifying or determining a fueling protocol supported between a dispenser supplying hydrogen to the hydrogen fueled mobility and the hydrogen fueled mobility using communications between the dispenser and the hydrogen fueled mobility; and determining whether the first fueling protocol supports a function or an interface of allowing a user to set a target state of charge (SOC) for fueling hydrogen to the hydrogen fueled mobility.

According to another aspect of another exemplary embodiment, a method of negotiating a hydrogen fueling protocol for fueling hydrogen to a hydrogen fueled mobility based on user-driven setting, may include: identifying or determining at least one fueling protocol supported by a dispenser supplying hydrogen to the hydrogen fueled mobility and the hydrogen fueled mobility using communications between the dispenser and the hydrogen fueled mobility; and selecting or determining a fueling protocol supporting a function or an interface of allowing a user to set the target state of charge (SOC) for fueling hydrogen to the hydrogen fueled mobility, among the at least one fueling protocol, as a preferred fueling protocol and negotiating the preferred fueling protocol through communications between the dispenser and the hydrogen fueled mobility.

### ADVANTAGEOUS EFFECTS

According to an exemplary embodiment of the present disclosure, it is possible to provide the fueling amount setting function in response to a request of a user.

According to an exemplary embodiment of the present disclosure, it is possible to provide a process and protocol for supporting the fueling amount setting function initiated by the user.

According to an exemplary embodiment of the present disclosure, it is possible to provide a process for determining an appropriate fueling amount according to an environmental situation and conditions during a fueling and for fueling/supplying hydrogen.

According to an exemplary embodiment of the present disclosure, it is possible to provide a protocol for bidirectional communications supporting the fueling amount setting function initiated by the user and the hydrogen fueling/supplying process.

### DESCRIPTION OF DRAWINGS

FIG. 1 is a conceptual diagram illustrating an example of a hydrogen fueling process for a hydrogen fueled mobility or vehicle to which an exemplary embodiment of the present disclosure is applied;
FIG. 2 is a conceptual diagram illustrating an example of a state change that occurs in the hydrogen fueling process for the hydrogen fueled mobility or vehicle to which an exemplary embodiment of the present disclosure is applied;
FIG. 3 is a conceptual diagram illustrating a platform or a test platform for a hydrogen fueling process according to an exemplary embodiment of the present disclosure;
FIG. 4 is a detailed block diagram of a dispenser subsystem shown in FIG. 3;
FIG. 5 is a conceptual diagram illustrating the platform or the test platform for the hydrogen fueling process according to an exemplary embodiment of the present disclosure;
FIG. 6 is a conceptual diagram the platform or the test platform for the hydrogen fueling process according to another exemplary embodiment of the present disclosure;
FIG. 7 is a flowchart illustrating a hydrogen fueling method based on user-driven setting according to an exemplary embodiment of the present disclosure;
FIG. 8 is a conceptual diagram illustrating various embodiments of hydrogen fueling process based on user-driven fueling amount setting;
FIG. 9 is a conceptual diagram illustrating various embodiments of the process and control method of hydrogen fueling based on user-driven fueling amount setting;
FIG. 10 is a conceptual diagram illustrating an example of the artificial neural network for controlling the hydrogen fueling process for the hydrogen fueled mobility according to an exemplary embodiment of the present disclosure;
FIG. 11 is a conceptual diagram illustrating a concept of a model predictive control of the hydrogen fueling process for a hydrogen fueled mobility according to an exemplary embodiment of the present disclosure;
FIG. 12 is a flowchart illustrating a process of training the artificial neural network for the hydrogen fueling control according to an exemplary embodiment of the present disclosure;
FIG. 13 is a conceptual diagram illustrating a bidirectional communication protocol for the hydrogen fueling process based on user-driven setting according to an exemplary embodiment of the present disclosure;
FIG. 14 is a conceptual diagram illustrating a communication protocol and operations for the hydrogen fueling process based on the user-driven setting according to an exemplary embodiment of the present disclosure; and
FIG. 15 is a block diagram showing a generalized configuration of a hydrogen fueling control apparatus, a hydrogen fueling control system, a hydrogen fueling test platform, a hydrogen fueling test system, or a computing system capable of performing at least a portion of the processes of FIGS. 1-14.

### BEST MODE

For a clearer understanding of the features and advantages of the present disclosure, exemplary embodiments of the present disclosure will be described in detail with reference to the accompanied drawings. However, it should be understood that the present disclosure is not limited to particular embodiments disclosed herein but includes all modifications, equivalents, and alternatives falling within the spirit and scope of the present disclosure. In the drawings, similar or corresponding components may be designated by the same or similar reference numerals.

The terminologies including ordinals such as "first" and "second" designated for explaining various components in this specification are used to discriminate a component from the other ones but are not intended to be limiting to a specific component. For example, a second component may be referred to as a first component and, similarly, a first component may also be referred to as a second component without departing from the scope of the present disclosure. As used herein, the term "and/or" may include a presence of one or more of the associated listed items and any and all combinations of the listed items.

In the description of exemplary embodiments of the present disclosure, "at least one of A and B" may mean "at least one of A or B" or "at least one of combinations of one or more of A and B". In addition, in the description of exemplary embodiments of the present disclosure, "one or more of A and B" may mean "one or more of A or B" or "one or more of combinations of one or more of A and B".

When a component is referred to as being "connected" or "coupled" to another component, the component may be directly connected or coupled logically or physically to the other component or indirectly through an object therebetween. Contrarily, when a component is referred to as being "directly connected" or "directly coupled" to another component, it is to be understood that there is no intervening object between the components. Other words used to describe the relationship between elements should be interpreted in a similar fashion.

The terminologies are used herein for the purpose of describing particular exemplary embodiments only and are not intended to limit the present disclosure. The singular forms include plural referents as well unless the context clearly dictates otherwise. Also, the expressions "comprises," "includes," "constructed," "configured" are used to refer a presence of a combination of stated features, numbers, processing steps, operations, elements, or components, but are not intended to preclude a presence or addition of another feature, number, processing step, operation, element, or component.

Unless defined otherwise, all terms used herein, including technical or scientific terms, have the same meaning as commonly understood by those of ordinary skill in the art to which the present disclosure pertains. Terms such as those defined in a commonly used dictionary should be interpreted as having meanings consistent with their meanings in the context of related literatures and will not be interpreted as having ideal or excessively formal meanings unless explicitly defined in the present application.

Terms used in the present disclosure are defined as follows.

Hydrogen fueled mobilities generally include not only a hydrogen electric vehicle or a hydrogen fuel cell electric vehicle (FCEV) using fuel cells but also an internal combustion engine (ICE)-based vehicle using the hydrogen as fuel.

Hydrogen fluid fuel may include gaseous hydrogen fuel or liquid hydrogen fuel.

"Compressed Hydrogen Storage System (CHSS)": An apparatus which is a part of the fuel cell of a vehicle to compress and store the hydrogen.

"Pressure Relief Device (PRD)": A device disposed in the CHSS and capable of isolating stored hydrogen from the other part of the fueling system and environment and exhausting the hydrogen to the outside.

"Hydrogen fueling process": A process of supplying the high-pressure hydrogen from a hydrogen fueling station to the fuel cell and to accumulate the hydrogen in a hydrogen tank.

"Pressure Ramp Rate (PRR)": An increase rate of a pressure of CHSS and measured in mega-pascals per minute (MPa/min).

"Average Pressure Ramp Rate (APRR)": An average of the increase rate of the pressure from the beginning to the end of the hydrogen fueling.

"Precooling": A process of cooling the hydrogen in a hydrogen fueling station before the fueling.

"Dispenser": A component supplying precooled hydrogen to the CHSS.

"Nozzle": A device that is connected to a hydrogen dispensing system of the hydrogen fueling station and may be coupled to a receptacle of the hydrogen electric vehicle and to supply the hydrogen fuel to the hydrogen electric vehicle.

Meanwhile, one or more conventional components may be included in a configuration of the present disclosure if necessary, and such components will be described herein to an extent that it does not obscure the technical idea and concept of the present disclosure. If the description of the conventional components may obscure the technical idea and concept of the present disclosure, however, detailed description of such components may be omitted for simplicity. For example, the use of a thermodynamic model for the hydrogen fueling control, an application of a model predictive control for a generalized dynamic control, and a preparation and a control of an artificial neural network for the training and inference of the artificial neural network may be implemented using conventional technologies, and at least some of the conventional components may be employed as elements required to embody the present disclosure.

However, the present disclosure is not intended to claim the conventional component, and the conventional component may be included as an elements of the apparatus or method of the present disclosure without deviating from the concept or spirit of the present disclosure.

Exemplary embodiments of the present disclosure will now be described in detail with reference to the accompanying drawings.

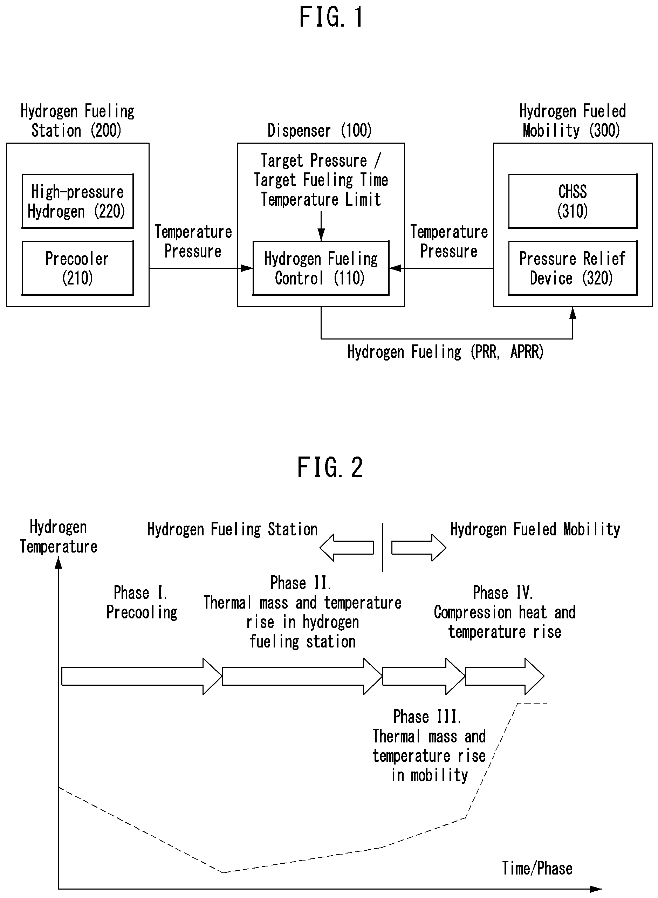

FIG. 1 is a conceptual diagram illustrating an example of a hydrogen fueling process for a hydrogen fueled mobility or vehicle to which an exemplary embodiment of the present disclosure is applied.

Referring to FIG. 1, precooled hydrogen gas is supplied from a hydrogen fueling station 200 to a hydrogen fueled mobility 300 through a dispenser 100. The hydrogen fueling process may be described by parameters including the average pressure ramp rate (APRR).

In general, a hydrogen storage system installed in the vehicles may generally include a high-pressure hydrogen storage tank, a pressure control device, high-pressure piping, and an external frame. The high-pressure hydrogen storage tank has been developed and commercialized with a capacity ranging from tens to hundreds of liters, and in case of devices for vehicles, small and lightweight storage tanks connected in parallel are used to secure high capacity.

The high-pressure hydrogen storage tank is widely known as the compressed hydrogen storage system (CHSS) 310. The term "storage tank" used herein for convenience of description refers to the CHSS 310.

In a typical hydrogen storage system, hydrogen storage is controlled through an access port allowing inflow and outflow of the hydrogen gas to and from the storage tank 310. In consideration of the characteristic that hydrogen injection and discharge does not occur simultaneously, a valve, pressure reducing mechanism, and various sensors for measurement are attached to the access port and the hydrogen storage is controlled through such devices.

The dispenser 100 is in charge of an interface between the hydrogen fueling station 200 and the hydrogen fueled mobility 300. The dispenser 100 may control a target pressure and injection speed, etc. based on information on the storage tank 310 of the hydrogen fueled mobility 300 and information on fuel supply of the hydrogen fueling station 200. A currently available control logic may follow the SAE J2601 (2020-05) standard.

Conventionally, the transmission of the information from the hydrogen fueled mobility 300 to the dispenser 100 is achieved through a communication method or a non-communication method. Even in the case where the communication method is employed conventionally, temperature and pressure values of the storage tank 310 in the hydrogen fueled mobility 300 are simply transmitted unidirectionally from the hydrogen fueled mobility 300 to the dispenser 100, and the dispenser 100 uses the information only as a safety reference for an emergency stop at a temperature limit or a pressure limit rather than actively utilizing the information.

All fueling control logic for a safe and rapid fueling is fulfilled in the dispenser 100, and the storage tank 310 is not equipped with any active safety management scheme but has only a safety management device that automatically releases the hydrogen through a pressure relief device (PRD) 320.

The hydrogen fueling station 200 may include a high-pressure hydrogen storage unit 220 and a precooler 210 in order to respond to an increase in the temperature of the hydrogen gas during a hydrogen fueling which will be described below with reference to FIG. 2. The precooler 210 lowers the temperature of the hydrogen gas through a precooling, so that precooled hydrogen gas is supplied to the hydrogen fueled mobility 300 via the dispenser 100.

According to an exemplary embodiment of the present disclosure, mechanical configurations of the devices for the hydrogen fueling may be generally similar to those of conventional devices, but the fueling control logic 110 in the dispenser 100 may actively control the hydrogen fueling process based on state information such as temperature and pressure data received from the hydrogen fueled mobility 300 and the hydrogen fueling station 200 and fueling status information such as a fueling rate or state of charge (SOC) of the CHSS 310.

According to an exemplary embodiment of the present disclosure, the fueling speed may be controlled in real-time based on real-time temperature data from the storage tank 310, so that the hydrogen fueling process may be operated at a highest fueling speed under a condition satisfying a safety limit, and a fueling time may be shortened as much as possible.

According to a conventional fueling protocol, boundary conditions for safety are set excessively strictly such that the precooling is excessive to the extent that the temperature of the storage tank 310 is measured to be around 40-50 °C at the time of completion of the fueling.

According to an exemplary embodiment of the present disclosure, precooling requirements and serving amounts are actively adjusted so as to optimize a cooling load of the hydrogen fueling station 200 and enhance an operation efficiency of the hydrogen fueling station 200.

The conventional protocol, which is set for a light duty hydrogen electric vehicle, has a problem that all variables must be reset and reflected in the standard in order to be applied to the fueling of a new mobility.

The fueling control logic according to an exemplary embodiment of the present disclosure is based on an artificial neural network and may be updated through a learning or training process when it is to be applied to a new device, and such a control scheme may be widely applicable to various kinds of mobilities.

The only way to prevent the overheating of the storage tank 310 of the hydrogen fueled mobility 300 in the conventional system may be to release the gas through the PRD 320 when the tank or the gas overheats above a certain temperature.

According to an exemplary embodiment of the present disclosure, a cooling system 330 which will be described below may be provided in the storage tank 310 itself to enable to increase the fueling speed and actively respond to the overheating of the storage tank 310. Thus, the safety of the hydrogen fueled mobility 300 may be improved.

An exemplary embodiment of the present disclosure allows to enhance the efficiency of the hydrogen fueling/supply process and improve the speed and the real-time operability of the hydrogen fueling/supply process while ensuring the safely in the fueling/supplying of the hydrogen fuel.

An exemplary embodiment of the present disclosure may provide a hydrogen fueling control scheme based on a model predictive control (MPC), which ensures the real-time operability.

An exemplary embodiment of the present disclosure may provide a control scheme based on an artificial neural network (ANN) model with an improved accuracy of predicting a hydrogen fueling result. The accuracy of predicting the hydrogen fueling result may be improved by applying real-time measurement data to the artificial neural network model that uses the actual fueling data along with theoretical simulation results.

An exemplary embodiment of the present disclosure may improve the efficiency of the hydrogen fueling control by integrally managing the actual measurement data and state information predicted by the model by use of an intelligent meta system (IMS).

As mentioned above, the conventional hydrogen fueling process between the hydrogen fueled mobility 300 and the hydrogen fueling station 200 is controlled by the dispenser 100. The dispenser 100 is equipped with a protocol for supplying the hydrogen into the hydrogen fueled mobility 300 according to a prescribed rule.

The protocol mounted on the dispenser 100 may be based on the international standard SAE J2601 (2020-05), which may be applied similarly to the embodiments of the present disclosure to the extent that it meets the purpose of the present disclosure.

For certain minimum requirements for safety, simulations based on thermodynamic modeling for various situations may be conducted, and a table-based static control or an MC formula-based partial real-time correction may be performed using parameters derived from the simulations.

The minimum requirements for safety may include guidelines for upper limits of the temperature and the pressure of the CHSS 310 and the fueling rate (SOC).

The simulations may be performed through thermodynamic modeling using boundary conditions including a best and a worst cases.

Such configurations may also be applied similarly to the embodiments of the present disclosure to the extent that it meets the purpose of the present disclosure.

Even when the configuration of FIG. 1 is employed, the following problems may arise in the conventional system where the state variables are not actively controlled by the dispenser 100. The problems may also be revealed in the systems relying on simulations using simple thermodynamic models.

Since the injection rate is determined in advance under an assumption of the worst (i.e., excessive) boundary conditions, an unnecessarily excessive precooling may occur and the overall fueling rate may be reduced. In such a conventional case, the injection rate may be determined simply by the average pressure ramp rate (APRR), which may hinder an active responding to a situation change. The unnecessarily excessive precooling may cause excessive energy consumptions and increase operation costs.

As mentioned above, the conventional methods have limitations in the applications. That is, the dependency on the simulation-based results may result in a limitation to a capacity or shape of the storage tank 310 actually applicable to the vehicle. In case of a new system, separate resources may be required for the development and application of the system.

Since thermodynamic model takes a lot of time to derive calculation results of mathematical equations, it is common that variables derived through the model are utilized indirectly. Accordingly, the application of the model is limited in cases where there are no variables calculated in advance. Further, thermodynamic models may reveal a lack of flexibility, e.g., a detailed adjustment of a model itself is difficult.

The conventional table-based method does not utilize the temperature of the precooled hydrogen provided by the hydrogen fueling station 200 or the temperature of the storage tank 310 measured in the hydrogen fueled mobility 300, and thus may result in a very low efficiency and a difficulty in flexibly dealing with any changes in surrounding conditions.

Though the conventional MC formula-based method corrects the precooling temperature in real-time, the calculation and application of the method are complex and there may exist limitations in the applications, which makes the expansion of the application difficult.

Therefore, there may be few alternative of which protocol was developed with a main goal of completing the safe fueling and which may actively control unexpected situations such as the excessive precooling or the overheating of the storage tank 310. These problems may bring about the increased operation costs due to the excessive cooling and delays in the fueling due to the overheating.

To solve the problems above, the present disclosure is characterized by reducing a dependency on the simulations and actively controlling the state variables by reflecting real-time measurement data.

FIG. 2 is a conceptual diagram illustrating an example of a state change that occurs in the hydrogen fueling process for the hydrogen fueled mobility 300 to which an exemplary embodiment of the present disclosure is applied.

Referring to FIG. 2, when the hydrogen is injected into the storage tank 310, an internal temperature of the gaseous hydrogen inside the storage tank 310 increases due to compression heat.

The temperature control of the hydrogen fueling process may be performed such that the internal temperature of the storage tank 310 may maintain below 85 °C at the time of completion of the fueling of the precooled hydrogen.

In the storage tank 310, domes and bodies may be enclosed by carbon fibers of which heat transfer efficiency is low so as to block heat exchanges between the gaseous hydrogen stored in the storage tank 310 and external atmosphere during the driving of the mobility.

While the temperature of the gaseous hydrogen inside the storage tank 310 rises during the fueling process, the temperature increase on a surface of the storage tank 310 is small compared with the internal temperature increase until the fueling is completed owing to the low heat transfer property of the storage tank 310.

Such a property may block heat exchange with the outside air which can alleviate the rapid temperature rise inside the storage tank 310 during the fueling, a separate temperature management scheme may be required.

However, the conventional system does not include any cooling mechanism other than receiving precooled hydrogen gas from the hydrogen fueling station 200.

Though the hydrogen fueling time may be managed such that the temperature of the hydrogen storage tank 310 is maintained below the upper limit, e.g., 85 °C, by the precooling and the control of the hydrogen injection rate at the hydrogen fueling station 200, are no additional separate measures to manage the temperature of the hydrogen storage tank 310 of the hydrogen fueled mobility 300.

As a result, it is difficult to control the temperature of the hydrogen storage tank 310 during the fueling in the hydrogen fueling station 200, especially in summer when the outside temperature is high, which may bring about problems such as a delay in the fueling.

According to an exemplary embodiment of the present disclosure, the fueling process is controlled based on a base model represented by a characteristic curve of FIG. 2 and optimal control conditions suitable for actual environments may be derived. In particular, the control of the operating load of the hydrogen fueling station 200 in the precooling stage in phase I and the fueling rates, i.e. the pressure ramp rates (PRRs) during the fueling process of Phase II through Phase IV may be optimized in consideration of real-time data according to variables such as an outside temperature, an atmospheric pressure, and weather conditions that may be measured in the actual surrounding environment unlike the conventional methods.

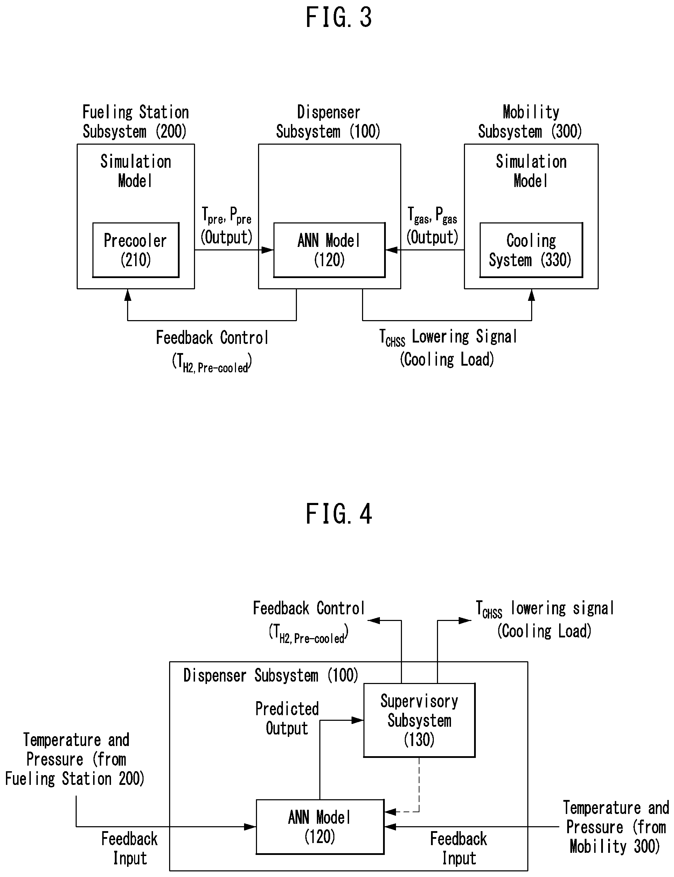

FIG. 3 is a conceptual diagram illustrating a platform or a test platform for a hydrogen fueling process according to an exemplary embodiment of the present disclosure. The platform according to an exemplary embodiment shown in FIG. 3 may include a mobility subsystem 300, a fueling station subsystem 200, and a dispenser subsystem 100, all of which may be simulation models. Although the embodiment shown in FIG. 3 is based on simulation models, the present disclosure is not limited thereto, and the mobility subsystem 300, the fueling station subsystem 200, or the dispenser subsystem 100 may be implemented by merging, combining, or alternatively selecting a simulation model and/or a data-based model based on real-time on-site dynamic data.

FIG. 4 is a detailed block diagram of the dispenser subsystem 100 shown in FIG. 3.

Referring to FIGS. 3 and 4 together, when a target precooling temperature is provided to the fueling station subsystem 200 as a control request and/or a feedback control by the dispenser subsystem 100, a precooling temperature data Tₚᵣₑ and a precooling pressure Pₚᵣₑ acquired by a simulation reflecting the precooler 210 or by measurements of actual on-site data may be output by the fueling station subsystem 200 to the dispenser subsystem 100 and transferred to an artificial neural network model 120.

In addition, when a CHSS temperature lowering signal for lowering the temperature of the CHSS (310) is provided to the mobility subsystem 300 as a control request by the dispenser subsystem 100, a gaseous temperature data T_{gas} and a gaseous pressure P_{gas} acquired by a simulation reflecting the cooler 330 or by measurements of actual on-site data may be output by the mobility subsystem 300 and transferred to the artificial neural network model 120. At this time, the temperature lowering signal may be considered as a type of cooling load (CL) in the mobility subsystem 300.

Referring to FIG. 4, in the dispenser subsystem 100, a prediction result inferred and output by the artificial neural network model 120 may be transferred to the supervisory subsystem 130. The supervisory subsystem 130 may provide the fueling station subsystem 200 with the target precooling temperature as the control request and/or the feedback control or may provide the mobility subsystem 300 with the CHSS temperature lowering signal as the control request.

The supervisory subsystem 130 shown in FIG. 4 may function as a kind of controller that controls the hydrogen fueling test process. Although it is shown in FIG. 4 as if the supervisory subsystem 130 is an independent hardware or software module mounted on the dispenser system 100 for convenience of description, the supervisory subsystem 130 may be implemented in a cloud and/or in a form of a remote server in an alternative embodiment of the present disclosure.

In addition, although the embodiment shown in FIG. 4 is based on the artificial neural network model 120, the present disclosure is not limited by the artificial neural network model 120 or the model predictive control technique. In another exemplary embodiment of the present disclosure, after the real-time on-site data is fed back to the dispenser subsystem 100 in response to hydrogen fueling control related information and/or the feedback control, the hydrogen fueling control related information and/or the feedback control may be updated or next hydrogen fueling control related information and/or feedback control may be generated based on the real-time on-site data. Another exemplary embodiment of the present disclosure may provide a hydrogen fueling protocol that does not rely upon the artificial neural network model 120 or the model predictive control, and a test method and a test platform for testing the hydrogen fueling system.

The fueling station 200 may be equipped with a plurality of hydrogen storage cylinders, each of which operates as a bank of a storage bank system. The real-time on-site data fed back by the fueling station 200 to the dispenser 100 may include the temperature and the pressure data for each bank.

The plurality of banks may be selectively connected to the dispenser 100 according to a request from the dispenser 100 and/or a selection of the fueling station 200. At this time, the temperature and the pressure information for each bank included in the real-time on-site information received by the dispenser 100 from the fueling station 200 may affect the selection and/or switching of the banks.

At least one bank in the storage bank system may change its state based on the temperature and pressure information for each bank included in the real-time on-site information received by the dispenser 100 from the fueling station 200.

For example, the temperature and the pressure of one or more of the banks in the fueling station 200 may be adjusted, as a preparatory step, to respective levels suitable for the fueling based on current state information of the bank. The adjustment may be performed in response to a request of the dispenser 100 or under a control of a control logic of the fueling station 200.

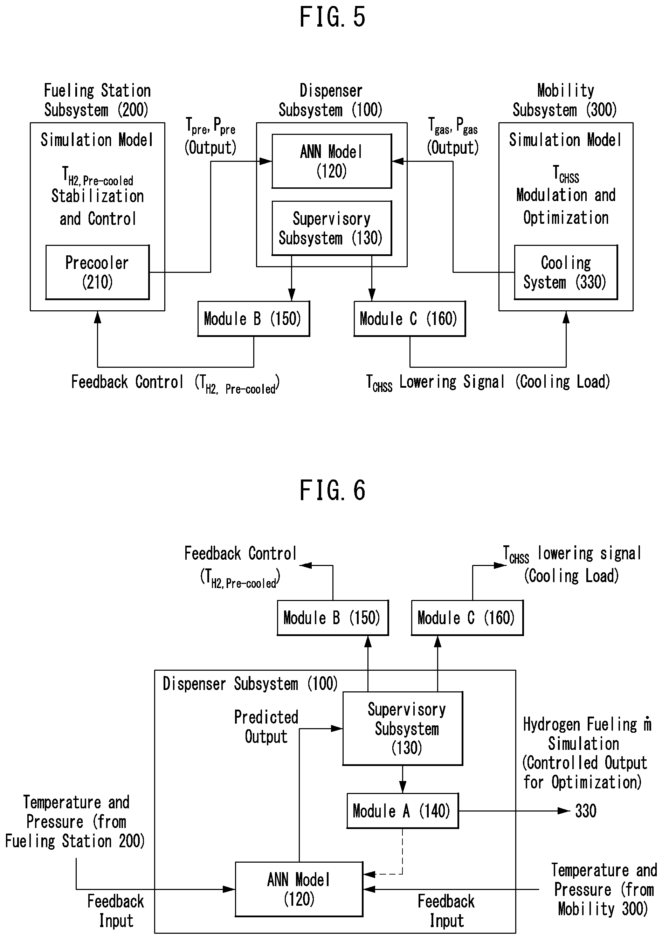

FIG. 5 is a conceptual diagram illustrating the platform or the test platform for the hydrogen fueling process according to an exemplary embodiment of the present disclosure.

Referring to FIG. 5, a communication interface module-C 160 may be disposed between the dispenser subsystem 100 and the mobility subsystem 300 as a communication interface facilitating bidirectional communications between the dispenser subsystem 100 and the mobility subsystem 300. In addition, a communication interface module-B 150 may be disposed between the dispenser subsystem 100 and the fueling station subsystem 200 as a communication interface facilitating bidirectional communications between the dispenser subsystem 100 and the fueling station subsystem 200.

When the fueling station subsystem 200 operates as a simulation model, the mobility subsystem 300 may operate as a modulation and optimization means for the temperature of the CHSS 310.

When the mobility subsystem 300 operates as a simulation model, the fueling station subsystem 200 may operate as a stabilization and control means for the precooling temperature.

FIG. 6 is a conceptual diagram illustrating the platform or the test platform for the hydrogen fueling process according to another exemplary embodiment of the present disclosure.

Referring to FIGS. 5 and 6 together, the supervisory subsystem 130 shown in FIG. 6 may function as a kind of controller that controls the hydrogen fueling test process.

The prediction result inferred and output by the artificial neural network model 120 may be transferred to the supervisory subsystem 130. The supervisory subsystem 130 may transmit a control request for the state of the hydrogen in the vehicle tank of the hydrogen fueled mobility 300 to the hydrogen fueled mobility 300 via the communication interface module-C 160. The control request for the state of the hydrogen in the vehicle tank of the hydrogen fueled mobility 300 may be a temperature lowering request for the hydrogen in the vehicle tank. The temperature lowering request may be provided as the temperature lowering signal.

The supervisory subsystem 130 may transmit a control request for the state of the hydrogen supplied from the fueling station 200 to the dispenser 100 to the fueling station 200 via the communication interface module-B 150. The control request for the state of the hydrogen supplied from the fueling station 200 to the dispenser 100 may be a precooling request. The precooling request may include the target precooling temperature.

The supervisory subsystem 130 may transmit, to the hydrogen fueled mobility 300 via a communication interface module-A 140, hydrogen fueling control related information including information related to a control command/request for the hydrogen fueling process in which the hydrogen is supplied from the fueling station 200 to the vehicle tank of the hydrogen fueled mobility 300 through the dispenser 100, and state information on the dispenser 100 side reflecting a result of execution of the control command/request for the hydrogen fueling process by the dispenser 100 side. The hydrogen fueling control related information may include one or more of information related to a control command for a pressure ramp rate (PRR) for fueling hydrogen into the vehicle tank, and state information on the dispenser 100 side including the result of the execution of the control command. In addition, the hydrogen fueling control related information may include one or more of information on a variable that may affect changes in the state of the hydrogen in the vehicle tank of the hydrogen fueled mobility 300, such as a real-time PRR or a mass flow rate of compressed hydrogen (m_dot) measured in kilograms per second (kg/s) and derived from a feedback control process, and information on the result of the execution of the control using the variable. These hydrogen fueling control related information may also affect weights or parameters of hidden layers of the artificial neural network model 120.

A thermodynamic model such as Hydrogen Filling Simulation (H2FillS), for example, may be used for a theoretical simulation. Thermodynamic model may include a model and/or software designed to track and report transient changes in one or more of the temperature, the pressure, and/or the mass flow of the hydrogen and/or transient changes in the state of the hydrogen in the vehicle tank while the hydrogen is fueled into the hydrogen fueled mobility. However, the inventive concept of the present disclosure is not limited to a specific embodiment of thermodynamic model.

The hydrogen filling protocol may include, for example, the fueling protocol defined in SAE J2601 standard. However, the inventive concept of the present disclosure is not limited to a specific embodiment.

Thermodynamic model can generate output data based on the modeling and the simulation when input data corresponding to the input data of the artificial neural network is applied, for example. At this time, variables of thermodynamic model may be adjusted according to the hydrogen fueling protocol. Further, different hydrogen fueling protocols may derive different output data for the same input data.

In an exemplary embodiment of the present disclosure, on-site data collected by the test platform may be provided as input data and output data of the artificial neural network, for training of the artificial neural network, instead of input data and output data of thermodynamic model. That is, some of the on-site data collected by the test platform may be provided as the input data of the artificial neural network while other some of the on-site data may be provided as ground truth data corresponding to the output data of the artificial neural network.

Internal parameters of the artificial neural network may be trained without an initialization. Alternatively, the internal parameters may be trained based on the on-site data after being initialized to certain values. For example, the input data and the output data (i.e., ground truth data) of the artificial neural network may be initialized based on thermodynamic model, and the internal parameters of the artificial neural network may be initially trained using initialized input and output data.

The training of the artificial neural network does not necessarily have to be performed by deep learning, but shallow learning may be used instead.

The test platform according to an exemplary embodiment of the present disclosure may rely on dynamic on-site data to optimize the hydrogen fueling process.

According to an exemplary embodiment of the present disclosure, a next state may be predicted by the model predictive control (MPC) technique based on the artificial neural network. In such a case, the artificial neural network model may be trained using a theoretical result, on-site data, or both of them.

In the case where the precooling function of the fueling station 200 or the cooling system 330 of the hydrogen fueled mobility 300 is not available, the module-A 140 may perform the control process alone or proactively.

To analyze a state change in the process between the dispenser 100 and the fueling station 200, a training model based on the on-site data between the dispenser 100 and the hydrogen fueled mobility 300 may function as a reference for the process between the dispenser 100 and the hydrogen fueled mobility 300.

Contrarily, to analyze a state change in the process between the dispenser 100 and the hydrogen fueled mobility 300, a training model based on the on-site data between the dispenser 100 and the fueling station 200 may function as a reference for the process between the dispenser 100 and the fueling station 200.

Standardized items or variables that may optimize and accurately describe the hydrogen fueling process may be derived by collecting big data associated with a type and an individual ID of the dispenser 100, a type and an individual ID of the fueling station 200, a type and an individual ID of the hydrogen fueled mobility 300, target control states for temperatures, pressures, and/or SOC, initial states of temperatures and pressures, and a type of the hydrogen fueling protocol and training the test platform by using the dynamic on-site data corresponding to various cases.

The hydrogen fueling test system according to an exemplary embodiment of the present disclosure, which is a system for testing hydrogen fueling for a hydrogen fueled mobility, may include: the communication interface module-A 140 transmitting the hydrogen fueling control related information affecting the state of the hydrogen in the vehicle tank of the hydrogen fueled mobility 300 to the hydrogen fueled mobility 300 and receiving the on-site data for the change in the state of the hydrogen in the vehicle tank as a feedback corresponding to the hydrogen fueling control related information; and the supervisory subsystem 130 or controller updating the model for the hydrogen fueling process for the hydrogen fueled mobility 300 corresponding to the hydrogen fueling control related information based on the on-site data for the change in the state of the hydrogen in the vehicle tank corresponding to the hydrogen fueling control related information.

The supervisory subsystem 130 may include a function of a controller. The term 'controller' used herein may refer to a configuration corresponding to the function of the controller of the supervisory subsystem 130. An operation of the controller may mean an operation performed by the function of the controller of the supervisory subsystem 130.

The supervisory subsystem 130 or controller may obtain a difference between a simulation result for the change in the state of the hydrogen in the vehicle tank corresponding to the hydrogen fueling control related information and the on-site data for the change in the state of the hydrogen in the vehicle tank.

The supervisory subsystem 130 or controller may update the model 120 for the hydrogen fueling process for the hydrogen fueled mobility corresponding to the hydrogen fueling control related information based on the difference between the simulation result and the on-site data.

The supervisory subsystem 130 or controller may obtain the simulation result for the change in the state of the hydrogen in the mobility tank corresponding to the control request by using thermodynamic model tracking the transient change in one or more of the temperature, the pressure, and/or the mass flow of the hydrogen.

The supervisory subsystem 130 or controller may apply a future probable hydrogen fueling control request to the model for the hydrogen fueling process to obtain the simulation result for the change in the state of the hydrogen in the vehicle tank corresponding to the hydrogen fueling control request by the model predictive control (MPC) technique.

The model 120 for the hydrogen fueling process corresponding to the hydrogen fueling control related information may be a model trained to predict the change in the state of the hydrogen in the vehicle tank based on the hydrogen fueling control related information related to an execution result of a hydrogen fueling control request, and the state of the hydrogen in the vehicle tank.

In particular, the model 120 for the hydrogen fueling process corresponding to the hydrogen fueling control related information may be trained to predict a future change in the state of the hydrogen in the vehicle tank based on the hydrogen fueling control related information, a current state of the hydrogen in the vehicle tank, a state of the hydrogen supplied to the mobility from the dispenser, and an ambient temperature.

The model 120 for the hydrogen fueling process corresponding to the hydrogen fueling control related information may be trained to predict the change in the state of the hydrogen in the vehicle tank according to each target state of the hydrogen in the vehicle tank targeted by the hydrogen fueling control related information and/or each hydrogen fueling protocol.

The model 120 may be an artificial neural network model. The supervisory subsystem 130 or controller may be trained to predict the change in the state of the hydrogen in the vehicle tank based on the hydrogen fueling control related information and the state of the hydrogen in the vehicle tank and using the on-site data for the change in the state of the hydrogen in the vehicle tank as the ground truth data so as to update the parameters of the model 120.

The model 120 may be trained to predict the change in the state of the hydrogen in the vehicle tank using the model prediction control technique.

After updating the model 120, the supervisory subsystem 130 or controller may replace the hydrogen fueled mobility 300 side with the model 120 to acquire at least one of the simulation data and the on-site data for the change in the state of the hydrogen supplied to the dispenser 100 from the fueling station 200 correspondingly to a second control request sent between the dispenser 100 supplying the hydrogen to the hydrogen fueled mobility 300 and the fueling station 200 supplying the hydrogen to the dispenser 100.

After updating the model 120, the supervisory subsystem 130 or controller may replace a side of the fueling station 200 with the model 120 to acquire at least one of simulation data and on-site data for the change in the state of the hydrogen in the vehicle tank of the hydrogen fueled mobility 300 correspondingly to a third control request sent between the hydrogen fueled mobility 300 receiving the hydrogen from the dispenser 100 and the dispenser 100.

The supervisory subsystem 130 or controller may determine, through the communication interface module-A 140, whether the hydrogen fueled mobility 300 is capable of actively responding to the hydrogen fueling control related information or the control request for the change in the state of the hydrogen to control the change in the state of the hydrogen in the vehicle tank or not. At this time, information on communication protocols and control protocol supported by the hydrogen fueled mobility 300 and communication protocols and control protocols supported by the dispenser 100 may be shared through communications between the hydrogen fueled mobility 300 and the dispenser 100 and/or the fueling station 200, and protocols commonly supported by the hydrogen fueled mobility 300 and the dispenser 100 may be chosen as the communication protocol and the control protocol.

The hydrogen fueling control request based on the hydrogen fueling protocol may include a control command for the pressure ramp rate (PRR) for fueling the hydrogen in the vehicle tank.

The hydrogen fueling control related information may include one or more of information on the hydrogen fueling control request, state information according to the execution result of the hydrogen fueling control request, or both of them. The control request for the change in the state of the hydrogen may include a control request for one or more of the temperature and the pressure of the hydrogen in the vehicle tank.

The change in the state of the hydrogen in the vehicle tank may include the change in one or more of the temperature, the pressure, and/or the state of charge (SOC).

The conventional hydrogen fueling process or hydrogen fueling control technique may be disadvantageous in that it is difficult to control the final SOC, the temperature or pressure of the nozzle, and the CHSS 310 as targeted. Meanwhile, theoretical simulation-based hydrogen fueling technique does not match the actual on-site data due to a pressure variability, an unstable flow rate, and a high environmental variability.

The discrepancy between the simulation result and the actual on-site data may be caused at least partially by the characteristics of devices and the diversity of the environment. Even if the same hydrogen fueling protocol is used, final on-site data may differ depending on an initial value or a target value. Conversely, even if the same initial value or the same target value is assumed, the final on-site data may differ depending on the hydrogen fueling protocol.

In order to solve the problems of the conventional process, an exemplary embodiment of the present disclosure may adopt a utilization of real-time on-site data, bidirectional communications between each of the devices, the predictive control technique, an integrated control of a whole system including the fueling station and the hydrogen fueled mobility, or a utilization and standardization of hydrogen fueling data based on user needs.

When a hydrogen fueling process is tested, the fueling protocol under test may be embedded within the supervisory system 130 or may be located externally to the supervisory system 130.

In addition, an exemplary embodiment of the present disclosure may enable enhancement of an existing hydrogen fueling protocol, standardization of a format of the on-site fueling data, and compilation and diagnosis of dynamic on-site data.

In relation to the enhancement of the existing hydrogen fueling protocol, an exemplary embodiment of the present disclosure may include the followings.

An existing hydrogen fueling protocol may be selected as a protocol under test.

An exemplary embodiment of the present disclosure may execute an artificial neural network-based model predictive control (ANN-MPC), execute an existing hydrogen fueling protocol under the same fueling conditions, and compare a result of fueling control by the ANN-MPC and a result of the fueling control by the existing hydrogen fueling protocol to reinforce or improve the existing hydrogen fueling protocol.

The supervisory subsystem 130 may embed the protocol 131 under test to request the fueling control based on the embedded protocol and compare a control value with a 'predicted output' from the ANN-MPC.

The supervisory subsystem 130 or controller may execute the existing hydrogen fueling protocol to transmit the hydrogen fueling control related information to the hydrogen fueled mobility 300 via the communication interface 140 or 160 and obtain the on-site data on the change in the state of the hydrogen in the vehicle tank via the communication interface 140 or 160.

The supervisory subsystem 130 or controller may obtain a hydrogen fueling control sequence from the model 120 for the hydrogen fueling process (in case that the ANN-MPC technique is used, a future time-series control sequence input may be predicted) and reinforce the existing hydrogen fueling protocol based on the hydrogen fueling control sequence provided by the model 120 for the hydrogen fueling process.

The supervisory subsystem 130 or controller may obtain result data of the execution of the hydrogen fueling control sequence provided by the model for the hydrogen fueling process and may reinforce, at least partly, the existing hydrogen fueling protocol by using the hydrogen fueling control sequence based on a comparison between the result data of the execution of the hydrogen fueling control sequence and the on-site data obtained through the existing hydrogen fueling protocol.

The fueling control result using the artificial neural network model 120 may be obtained by operating the model 120 or from a database built in advance. Basic specifications used in the fueling protocol 131 under test may not be changed, but the details, i.e., a fueling table or logics, may be reinforced or improved with reference to the fueling control values of the artificial neural network model 120. At this time, the fueling control result using the artificial neural network model 120 may be compared with the on-site data obtained as the execution result of the fueling protocol 131 under test to partly improve the details of the fueling protocol 131 under test in case where the performance of the fueling control result using the artificial neural network model 120 is superior. The comparison between the fueling control result and the execution result of the fueling protocol 131 under test may also be performed for all or part of the hydrogen fueling process.

According to an exemplary embodiment of the present disclosure, a lumped thermodynamic model for the artificial neural network for a dispenser-vehicle interaction may be utilized taking into account following features:
- 0-dimensional unsteady state mass and energy balance
- 1-dimensional heat transfer for vehicle tank wall
- CoolProp for evaluation of hydrogen properties

An exemplary embodiment of the present disclosure may perform a comparative analysis between theoretical simulation result and the actual on-site data.

An exemplary embodiment of the present disclosure may perform a predictive analysis under a specific condition in addition to conditions assumed in the hydrogen fueling protocol.

An exemplary embodiment of the present disclosure may improve the reliability of the hydrogen fueling process by collecting and processing the on-site hydrogen fueling data.

The on-site data for the change in the state of the hydrogen in the vehicle tank may be first acquired by the mobility side. That is, the mobility side may acquire the on-site data for the change in the state of the hydrogen in the vehicle tank regardless of the control request that may be transmitted to the hydrogen fueled mobility. Alternatively, the control request may include an on-site data request, and the mobility side may acquire the on-site data in response to the control request including the on-site data request.

The acquisition of the on-site data may be performed by the fueling station side in addition to the hydrogen fueled mobility. In such a case, the fueling station side may acquire the on-site data regardless of the control request. Alternatively, the control request may include an on-site data request, and the fueling station side may acquire the on-site data for the state of the hydrogen stored in the fueling station and/or the hydrogen supplied to the dispenser from the fueling station in response to the control request including the on-site data request.

The on-site data may refer to data obtained from the fueling station side and/or the mobility side during an actual hydrogen fueling/supply process. Here, the on-site data may include data obtained in an environment where some or all of the fueling station and the hydrogen fueled mobility are test environments in addition to the data obtained in the actual fueling station and/or the actual mobility.

The on-site data may include data obtained from a test environment or responsive (i.e., feedback capable) apparatus corresponding to the hydrogen fueled mobility side, a test environment or responsive (i.e., feedback capable) apparatus corresponding to the hydrogen storage cylinder and dispenser side of the fueling station, and/or a test environment that may be equipped with the communication module-A corresponding to a dispenser control system side or may be comprised of an executable apparatus.

The on-site data may include data obtained from a test environment or a fueling site where all the devices belong to the three test environments or apparatuses described above or the devices include one or more of the three test environments or apparatuses.

For example, the on-site data may include data obtained from a test environment or a fueling site including the simulation models linked to the communication module-B 150 and the communication module-C 160 shown in FIG. 5.

The responsive (i.e., feedback-capable) apparatus may refer to an apparatus including a database built based on the actual on-site data and capable of responding to a case requested through the communication module-A.

The on-site data may include and be classified into static data such as a type of the vehicle tank, a volume of the vehicle tank, a number of the vehicle tank modules or banks and dynamic data such as the temperature and pressure of the hydrogen in the vehicle tank.

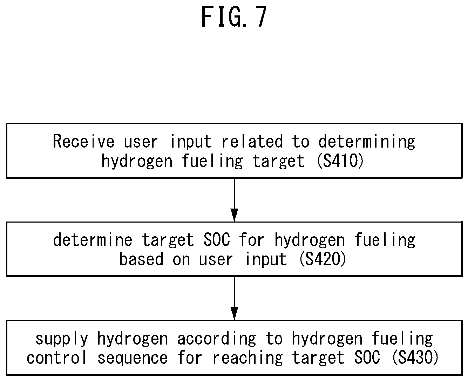

FIG. 7 is a flowchart illustrating a hydrogen fueling method based on user-driven setting according to an exemplary embodiment of the present disclosure.

Referring to FIG. 7, a hydrogen fueling method based on user-driven setting according to an exemplary embodiment of the present disclosure is a method of fueling hydrogen to a hydrogen fueled mobility 300 and may include: an operation S410 of receiving a user input related to setting a hydrogen fueling target; an operation S420 of determining a target state of charge (SOC) for fueling hydrogen to the hydrogen fueled mobility 300 based on the user input; and an operation S430 of being supplied with hydrogen according to a hydrogen fueling control sequence for reaching the target SOC.

In an exemplary embodiment of the present disclosure, it may be assumed that the operations S410 through S430 shown in FIG. 7 are performed on the hydrogen fueled mobility 300 side. In this case, the hydrogen fueled mobility 300 side may be understood to refer to at least one of a controller in the hydrogen fueled mobility 300 (e.g., an ECU or vehicle MCU), an electric vehicle communication controller (EVCC) in the hydrogen fueled mobility 300, or a controller of a fueling system in the hydrogen fueled mobility 300.

In an exemplary embodiment of the present disclosure, the user input may include the target SOC for the hydrogen fueling of the mobility. For example, a driver may directly determine the SOC through an interface of the hydrogen fueled mobility 300 or a driving application program.

In the operation S420 of determining the target SOC, the target SOC may be determined based on one or more of a current SOC of the hydrogen fueled mobility 300 and fueling-related situation information of the hydrogen fueled mobility 300 based on the user input. For example, the mobility 300 side, rather than the dispenser 100 or the supervisory system 130, may determine a final target SOC based on the SOC or a fueling amount intended by the user.

The hydrogen fueling method based on user-driven setting according to an exemplary embodiment of the present disclosure may further include: an operation of acquiring progress data of the hydrogen fueling process for the hydrogen fueled mobility 300 from an initial SOC to the target SOC; and an operation of transmitting the progress data for the hydrogen fueled mobility 300 to the dispenser 100 or a fueling control system 130 supplying the hydrogen to the hydrogen fueled mobility 300 so that the progress data for the hydrogen fueled mobility 300 may be monitored.

The dispenser 100 or the supervisory system or fueling control system 130 may share data of the hydrogen fueled mobility 300 side for monitoring the fueling process through real-time bidirectional communications with the hydrogen fueled mobility 300 side.

The operation S430 of being supplied with hydrogen according to the hydrogen fueling control sequence for reaching the target SOC may include an operation of generating a hydrogen fueling control request with respect to one or more intermediate SOCs between the initial SOC and the target SOC.

In this case, the hydrogen fueled mobility 300 side may request a hydrogen fueling or a determination for the fueling protocol based on relations between individual input and output pressures in a certain pressure range between a start point and an end point.

Though the method according to the exemplary embodiment shown in FIG. 7 may be performed by the hydrogen fueled mobility 300 side, it is to be understood that each operation shown in FIG. 7 may be performed by the dispenser 100 side equivalently. In the method performed by the dispenser 100 side, the supplier or provider and the receiver may be changed from those depicted from FIG. 7 accordingly.

In addition, the operations performed by either the hydrogen fueled mobility 300 side or the dispenser 100 side described herein may be performed by an opposite side of the hydrogen fueled mobility 300 or the dispenser 100 or may be performed by cooperations of the hydrogen fueled mobility 300 and the dispenser 100 according to another embodiments.

A hydrogen fueling method based on user-driven setting according to another embodiment of the present disclosure may be performed by the dispenser 100 side supplying the hydrogen contrarily to the embodiment shown in FIG. 7. The method may include an operation of receiving the user input related to setting the hydrogen fueling target; an operation of determining the target state of charge (SOC) for fueling hydrogen to the hydrogen fueled mobility based on the user input; and an operation of providing the hydrogen fueling control sequence for reaching the target SOC.

In this case, the user input may include the target SOC for the hydrogen fueling of the mobility. The user input may correspond to an entry that is input through the interface of the hydrogen fueled mobility 300 or the driving application program by the driver after directly determining the SOC. The SOC based on the user input may be transferred to the dispenser 100 side through a wired or wireless communication network. The dispenser 100 side may refer to at least one of the dispenser 100 or a controller in the dispenser 100, the supervisory system 130, and/or a device related to the dispenser 100 and having a communication functionality.

In the operation of determining the target SOC, the target SOC may be determined based on one or more of the current SOC of the hydrogen fueled mobility 300 and the fueling-related situation information of the hydrogen fueled mobility 300 according to the user input. The dispenser 100 or the supervisory system 130 may determine a final target SOC based on the user input.

Conventionally, the hydrogen fueling is frequently carried out with a goal of full fueling (i.e., the SOC is 100%). However, achieving the full fueling is a physically challenging condition in reality. In addition, constrains required by the protocol itself may pose another difficulties in the fueling process due. Another problem of the conventional technology may include a difficulty in accurately determining the SOC, which may be caused by the problems that an actual SOC is lower than the target SOC and a final temperature is low when the fueling is completed.

In conventional standards, it is not possible to change the fueling amount according to the user's needs. However, due to differences in vehicle types, differences in rates between fueling stations, differences in driving patterns between drivers, and differences in driving distances between fueling business operators, there is a need for each user to determine the fueling amount for the user that matches the situation and user's needs.

For example, in case of a personal passenger vehicle, the user may wish to set the fueling amount according to the daily, weekly, or monthly driving distance of the user, the location or rate of the fueling station, and personal preferences.

In case of commercial vehicles such as buses and trucks, the fueling of the vehicles at a garage requires much time due to the large capacity of the batteries in the vehicles, and the adjustment of the fueling amount for each vehicle may be required.

In this case, the fueling amount profile of the commercial vehicles may need to be adjusted according to the driving distance, the driving time, and the driving pattern of each vehicle.

In the viewpoint of the operation of the fueling station 200, the fueling to an appropriate level may be more advantageous than the full fueling to enhance an efficiency of the operation.

Fueling based on the required amount for each vehicle may be advantageous to a fuel efficiency and the lifespan of major components such as the storage tank.

Exemplary embodiments of the present disclosure may utilize the following ideas for solving the problems and improving the system by implementing a fueling control sequence based on user-driven fueling amount setting.

The fueling amount may be determined under the user's initiative, and the fueling amount set by the user may be presented to the fueling station 200.

The information to be determined by the user or transmitted to the fueling station 200 may include one or more of a monetary amount (a set value), a fluid amount (a set weight in kilograms (kg), for example), a target value (a set pressure in kg/m², for example), and a determined fueling amount.

Example 1: A driver may determine and input a target fueling amount through an in-vehicle application or a fueling application on a separate device, and the input fueling amount related information may be transmitted to the dispenser 100.

Example 2. A user may input a desired fueling amount through a screen provided by the fueling station 200, and the dispenser 100 or the fueling control system may receive the fueling status of the hydrogen fueled mobility 300 and fueling-related situation information (including surrounding information such as the ambient temperature) to finally determine the fueling amount and set a target value based on the fueling amount.

In this case, an availability or compatibility of the fueling may be determined through communications with the dispenser 100, and the fueling target and the progress may be checked through an interface of the hydrogen fueled mobility 300.

Following technologies may be required as prerequisites to implement the fueling control sequence based on user-driven fueling amount setting according to an exemplary embodiment of the present disclosure:
- Enabling to set the fueling target according to the vehicle and other individual conditions and proceed with the fueling according to the setting
- Improving the function of the full fueling according to a current protocol
- Addition of a function/interface to switch the relations between the SOC, the hydrogen amount in the CHSS in kilograms, the temperature and/or the pressure

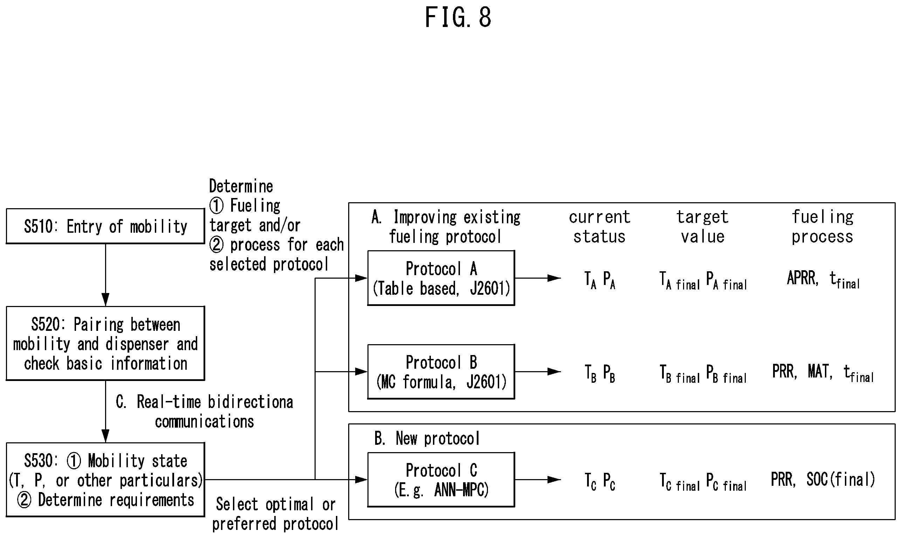

FIG. 8 is a conceptual diagram illustrating various embodiments of the hydrogen fueling process based on user-driven fueling amount setting.

The hydrogen fueling sequence based on user-driven fueling amount setting of the present disclosure shown in FIG. 8 may include the following embodiments.
Embodiment A. Improvement of existing fueling protocol
Embodiment B. Technology of new protocol having user-driven fueling amount setting function
Embodiment C. Improvement of communication scheme for real-time control

When the hydrogen fueled mobility 300 enters the fueling station 200 in the operation S510 of FIG. 8, an operation of determining the fueling target and the process for a selected protocol may be performed. This operation may correspond to the operations S410 and S420 of FIG 7.

In addition, a pairing between the hydrogen fueled mobility 300 and the dispenser 100 and checking basic information may be performed (S520).

Then, the state (e.g., temperature T, pressure P, and other particulars) of the hydrogen fueled mobility 300 and requirements of the user for the hydrogen fueled mobility 300 may be determined (S530).

After the operation S530, an optimal or preferred protocol may be selected.

That is, a preferred protocol may be selected for each user, or an optimal protocol may be determined based on a suggestion of the system.

A method and/or process of setting the fueling amount may differ depending on the protocols, and such constraints may need to be taken into account when the preferred protocol or the optimal protocol is determined.

The operation S430 of supplying the hydrogen may be performed after the operation S530. In the operations S530 and S430, real-time bidirectional communications may be utilized (Embodiment C).

In addition, an improvement of the existing protocol (Embodiment A) or a development of a new protocol (Embodiment B) may be exploited in order to control the hydrogen fueling process in the operation S430.

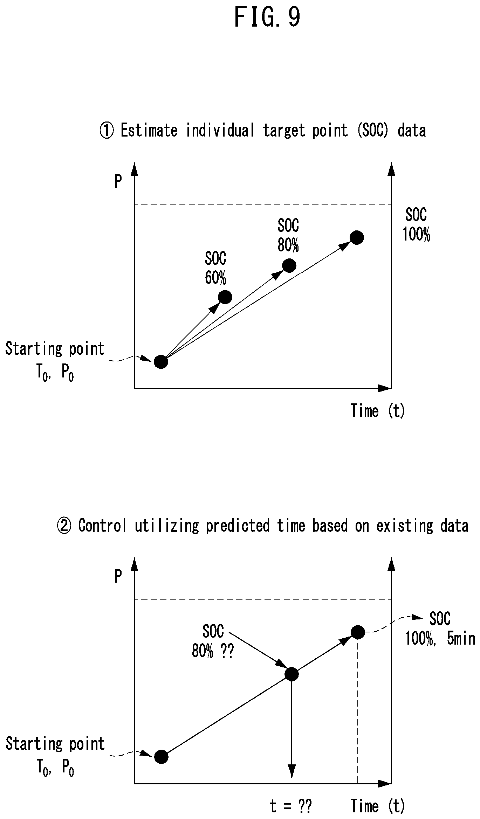

FIG. 9 is a conceptual diagram illustrating various embodiments of the process and control method of hydrogen fueling based on user-driven fueling amount setting.

According to an embodiment (1) shown in FIG. 9, in an operation of providing the hydrogen fueling control sequence for reaching the target SOC by the dispenser 100 or the supervisory system 130, a target hydrogen fueling control sequence corresponding to the target SOC may be determined from a group of hydrogen fueling control sequence candidates for reaching respective target SOCs.

Fueling efficiency of the embodiment (1) shown in FIG. 9 may be enhanced through the development of a new protocol (Embodiment B shown in FIG. 8)

According to an alternative embodiment of the present disclosure, i.e., Embodiment (2) shown in FIG. 9, in the operation of providing the hydrogen fueling control sequence for reaching the target SOC by the dispenser 100 or the supervisory system 130, the hydrogen fueling control sequence for reaching the target SOC may be predicted based on previous hydrogen fueling data between the dispenser 100 supplying the hydrogen to the hydrogen fueled mobility 300 and the hydrogen fueled mobility 300.

The embodiment (2) of FIG. 9 is related to a method of controlling the fueling process by utilizing a fueling time predicted based on existing data, and so on, and may be achieved through the improvement of existing fueling protocol (Embodiment A shown in FIG. 8). An achievable fueling efficiency in this case is expected to be lower than that in the embodiment (1) of FIG. 9.

In the graphs of embodiments (1) and (2) of FIG. 9, the slope of the pressure change represents the fueling speed, and the average pressure ramp rate (APRR), the instantaneous pressure ramp rate (PRR), and so on may be used for the fueling control. Commonly in the embodiments (1) and (2) of FIG. 9, a target value corresponding to a user-set SOC may be set within a limit criterion, and a control parameter for the fueling may be determined step by step.

According to conventional protocols such as SAE J2601, which is taken into account herein, a relation between the start and end points of a simulation-based fueling is derived and the fueling process is controlled in consideration of the relationship. In this case, however, since it may be difficult to change the end point instantaneously and the fueling speed is set under an assumption of a full fueling, there may happen a problem of inefficiency when the target SOC is decreased. In addition, it is practically infeasible to individually designate a fueling speed for each of a plurality of target pressures.

To solve the problems of the conventional technologies, the present disclosure aims to improve the fueling process in a way that enables an optimized control tailored for each of various target values.

The fueling protocol according to an exemplary embodiment of the present disclosure is based on relationships between input and output point pairs of individual pressure intervals rather than a whole fueling process from the start point to the end point of the fueling.

For example, if input states are P₀ = 100 bar and T₀ = 25 °C and states after one second is taken as an output, the output may be P₁ = 102 bar and T₁ = 26 °C.

The states of P₁ = 102 bar and T₁ = 26 °C may be given as a next input, and the states of P₂ = 103 bar and T₂ = 27 °C after one second may be obtained as an output.

Afterwards, the states of P₂ = 103 bar and T₂ = 27 °C may be given as a next input, and the states of P₃ = 104 bar and T₃ = 27 °C after one second may be obtained as an output.

According to an exemplary embodiment of the present disclosure, the entire fueling process may be reconstructed as a combination of segmented fueling sequences, divided by a certain constraint (e.g., in an interval of one second), for reaching respective intermediate SOCs or intermediate state values, and the fueling protocols may be applied for each of the segmented fueling sequences.

In an exemplary embodiment of the present disclosure, the operation of providing the hydrogen fueling control sequence for reaching the target SOC by the dispenser 100 or the supervisory system 130 may include an operation of generating a hydrogen fueling control command for fueling with respect to at least one intermediate SOC between the initial SOC and the target SoC of hydrogen fueling.

In order to implement the hydrogen fueling method according to an exemplary embodiment of the present disclosure, the following conditions may be required as prerequisites.
(a) Development of an ANN model and utilization of a protocol related to the ANN model
(b) Collecting data of an actual fueling process and analyzing the data by classifying by cases
(c) Utilizing, for various use cases, the on-site data acquired in the operations (a) and (b) and required for the ANN model

Meanwhile, as a prerequisite for providing the hydrogen fueling method based on user-driven fueling amount setting, a testing may be performed on the on-site data acquired in the operations (a) and (b) and the performance of the ANN model. The testing may be carried out by implementing the test platform with reference to the embodiments of FIGS. 1-6.

Further, referring to the embodiments of FIGS. 1-6, the present disclosure may include embodiments of the following optimization types.

### Embodiment: Optimization Type 1

An independent optimization case may be provided in relation to the supervisory system 130 in the dispenser 100.

The ANN-MPC model may optimize the hydrogen fueling parameters without a control of the precooler or the CHSS.

### Embodiment: Optimization Type 2

An integrated optimization case involving the dispenser 100 and the hydrogen fueled mobility 300 may be provided.

The ANN-MPC model may operate in conjunction with the precooler and the hydrogen fueled mobility 300, and may be involved in the process of adaptively controlling the precooling temperature of the hydrogen fueled mobility 300 side. In particular, such an optimization may be carried out using the CHSS temperature lowering signal of the hydrogen fueled mobility 300.

According to an exemplary embodiment of the present disclosure, the operation of providing the hydrogen fueling control sequence for reaching the target SOC by the dispenser 100 or the supervisory system 130 may be performed using the artificial neural network 120 receiving a first intermediate SOC among one or more intermediate SOCs and predicting a hydrogen fueling control sequence for reaching a second intermediate SOC, which is a next intermediate SOC.

The artificial neural network 120 may receive the first intermediate SOC as input and generate a series of predicted future values of the hydrogen fueling control sequence for reaching the second intermediate SOC by means of a model predictive control technique.

According to an exemplary embodiment of the present disclosure, the operation of providing the hydrogen fueling control sequence for reaching the target SOC by the dispenser 100 or the supervisory system 130 may be performed based on the on-site data in which relations between hydrogen fueling control commands and changes in the SOC during a process from the initial SOC to the target SOC is recorded.

The hydrogen fueling method based on user-driven fueling amount setting performed by the dispenser 100 or the supervisory system 130 according to an exemplary embodiment of the present disclosure may further include: an operation of acquiring or receiving the progress data of the hydrogen fueling process for the hydrogen fueled mobility 300 from the dispenser 100 supplying the hydrogen to the hydrogen fueled mobility 300 through the bidirectional communications during the hydrogen fueling process from the initial SOC to the target SOC; and an operation of monitoring the hydrogen fueling process based on a result of a comparison between the predicted data and the progress data from the initial SOC to the target SOC.

The hydrogen fueling method based on user-driven fueling amount setting performed by the dispenser 100 or the supervisory system 130 according to an exemplary embodiment of the present disclosure may further include: an operation of identifying or determining, through a communication with the hydrogen fueled mobility 300, whether the hydrogen fueled mobility 300 is capable of being supplied with hydrogen.

The hydrogen fueling method based on user-driven fueling amount setting performed by the dispenser 100 or the supervisory system 130 according to an exemplary embodiment of the present disclosure may further include: an operation of acquiring or receiving the target SOC through a communication with the hydrogen fueled mobility 300; and an operation of providing the hydrogen fueled mobility 300 with the predicted data of a hydrogen fueling control sequence for reaching the target SOC.

In the hydrogen fueling method based on user-driven fueling amount setting performed by the dispenser 100 or the supervisory system 130 according to an exemplary embodiment of the present disclosure, when the user input includes a change of information related to setting the hydrogen fueling target, the operation of determining the target SOC may include an operation of determining a new target SOC updated based on the user input and/or the change of information.

The hydrogen fueling method based on user-driven fueling amount setting performed by the dispenser 100 or the supervisory system 130 according to an exemplary embodiment of the present disclosure may further include: an operation of providing the hydrogen fueled mobility 300 with the predicted data for an updated hydrogen fueling control sequence for reaching the new target SOC through the communication with the hydrogen fueled mobility 300.

In the embodiments described above, the hydrogen fueling process or the control operation for hydrogen fueling is performed by either the hydrogen fueled mobility 300 or the dispenser 100. However, the operation of the hydrogen fueled mobility 300 may be replaced by a corresponding operation of the dispenser 100, and the operation of the dispenser 100 may be replaced by a corresponding operation of the hydrogen fueled mobility 300. In addition, at least a part of the hydrogen fueling process or the control operation for hydrogen fueling may be performed by cooperations between the hydrogen fueled mobility 300 and the dispenser 100.

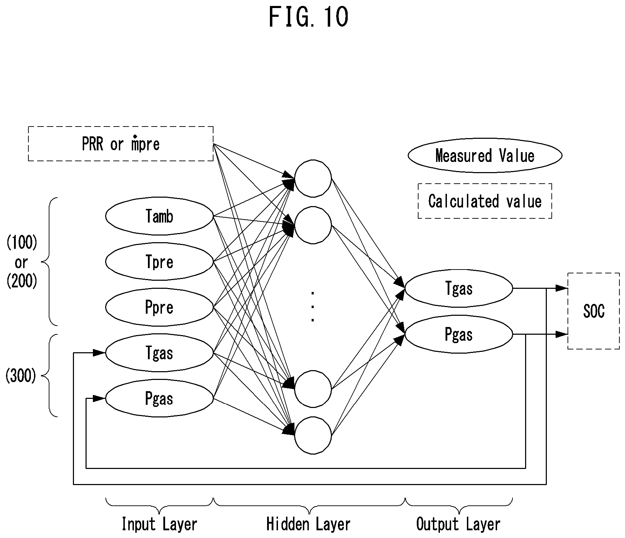

FIG. 10 is a conceptual diagram illustrating an example of the artificial neural network for controlling the hydrogen fueling process for the hydrogen fueled mobility according to an exemplary embodiment of the present disclosure;

As shown in FIG. 10, the current state measurement values are input to an input layer.

The current state measurement values, the ambient temperature T_{amb}, a precooled gas temperature Tₚᵣₑ, and a precooled gas pressure Tₚᵣₑ may be measured at a nozzle of the dispenser 100 or the hydrogen fueling station 200.

A gaseous hydrogen temperature T_{gas} and a gaseous hydrogen pressure P_{gas} may be measured at the CHSS 310 side of the hydrogen fueled mobility 300, and the actual measurement values may be input to the input layer.

During the training process of the artificial neural network, the current state measurement values may be provided to the input layer and the next state measurement values may be provided to an output layer as the ground truth data for the training of the artificial neural network. The training process of the artificial neural network may refer to a process of training a function of predicting the next state measurement value of the output layer based on a combination of the input measurement values. A correlation between the data input to the input layer and data given to the output layer is trained, which enables the predictions using theoretical results and real dynamic fueling data.

During an inference or output process using the artificial neural network, the actually measured on-site measurement values may be provided to the input layer and a prediction value for the next measurement value may be obtained as an output inferred by an operation of the artificial neural network.

The shallow learning or the deep learning may be used for the training process of the artificial neural network according to exemplary embodiments of the present disclosure, and the artificial neural network may be any type of network as long as it can meet the purpose of the present disclosure.

The values input to the input layer may be passed to the output layer through weight-based calculations in a hidden layer.

The state value output by the output layer, i.e. the prediction value for the next state, may be used to calculate a fueling state variable, e.g., a filling rate or SOC, using at least a part of thermodynamic model.

An exemplary embodiment of the present disclosure allows a hybrid control combining a theoretical simulation model and an artificial neural network. The hybrid control may fulfill certain results even through a training using a small amount of data and may achieve a desired performance that meets the purpose of the present disclosure by use of a lightweight artificial neural network.

A real-time pressure ramp rate (PRR) or a mass flow rate of compressed hydrogen (M) measured in a unit of kilograms per second (kg/s) (m_dot) derived from a feedback control process may affect the weights or parameters of the hidden layer of the artificial neural network.

The artificial neural network-based hydrogen fueling technique of the present disclosure may improve an accuracy of predicting fueling results through the model. Since the actual fueling data may be used along with theoretical simulation results, the real-time measurement data may be reflected in the prediction, which may further improve the accuracy of the prediction results.

While the conventional control protocol calculates and predicts the results through a simulation customized to an individual situation, the exemplary embodiment of the present disclosure may improve the accuracy through repeated training for various situations.

Because of the difference, the accuracy according an exemplary embodiment of the present disclosure gradually improves through updates as various theoretical values and empirical results are added. Furthermore, even when a new fueling process which employs a new storage tank 310 with a different configuration or of which flow rate is changed is introduced, the model may be updated and adapted to the new fueling process through the training using additional training data. Thus, the control method may be widely applicable to various mobilities.

The model prediction control (MPC) technique may be used for the hydrogen fueling control technique in the hydrogen fueling test for the hydrogen fueled mobility 300 according to an exemplary embodiment of the present disclosure.

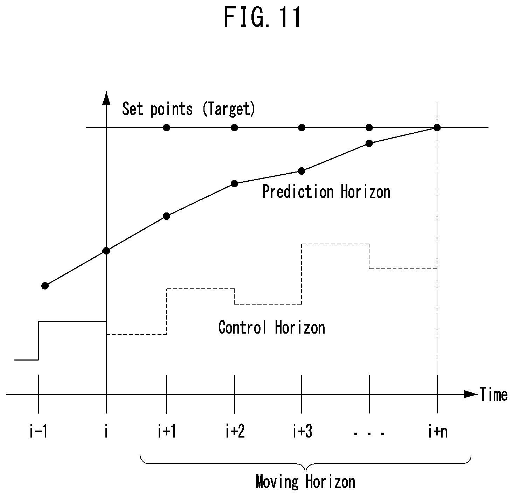

FIG. 11 is a conceptual diagram illustrating a concept of the model predictive control of the hydrogen fueling process for the hydrogen fueled mobility according to an exemplary embodiment of the present disclosure.

In an exemplary embodiment, a future fueling result is predicted from the hydrogen fueling model and current measured data in a state that the accuracy of the hydrogen fueling model reached a certain level, and the pressure ramp rate (PRR) may be controlled in real-time based on a prediction value and a measurement value such that an optimal fueling target may be reached while certain variables such as the temperature T_{gas} or the pressure P_{gas} of the gaseous hydrogen in the gaseous hydrogen of CHSS 310 does not violate the constraints.

Referring to FIG. 11, the model predictive control scheme according to an exemplary embodiment of the present disclosure may obtain a future output value based on the predicted value obtained by the model and the current measurement value and adjust the operation parameter or variable such that the predicted future response moves to setpoints or target in an optimal manner.

For example, N model-based prediction values may be derived at a current time (i). The N model-based prediction values may form a prediction horizon.

Meanwhile, N control commands or control actions required to make N model predictions may form a control horizon. Each model-based prediction value in the prediction horizon may correspond to a respective value in the control horizon.

Actually, an (i+1)-th control action which is the first control action among the N control actions derived at the current time (i) may be delivered to the system. After one time interval, new N model prediction values and new N control actions are derived at the time (i+1), and the new model prediction values and the new control actions form a new prediction horizon and a new control horizon, respectively.

The technique of controlling the system while expanding or moving the horizon in such a manner is referred to as the model predictive control. According to an exemplary embodiment of the present disclosure, the model predictive control is conducted by using the measurement values of state information or the state values including the temperature and the pressure of gaseous hydrogen in the CHSS 310 and the prediction values of the state variables.

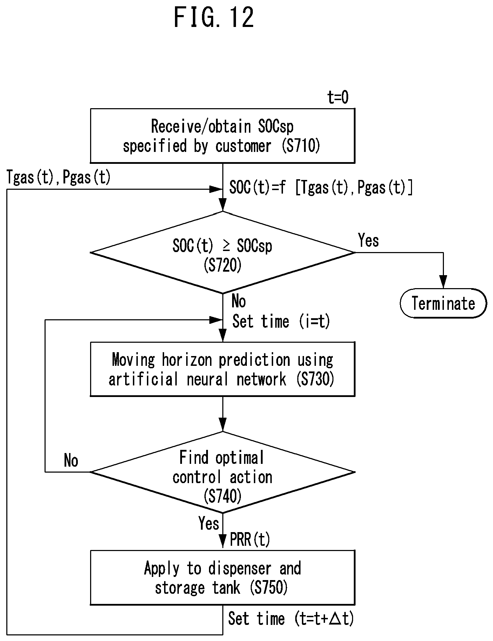

FIG. 12 is a flowchart illustrating a process of training the artificial neural network for the hydrogen fueling control according to an exemplary embodiment of the present disclosure.

A process of training the artificial neural network according to an artificial neural network-model predictive control (ANN-MPC) technique in accordance with an exemplary embodiment of the present disclosure is shown in FIG. 12.

In the exemplary embodiment shown in FIG. 12, it is assumed that N future predictions are used along with the control commands respectively corresponding thereto. The N future predictions are assumed to be acquired from the neural network model 120 having learned a function of acquiring the prediction horizon and the control horizon based on the artificial neural network and the model predictive control, in particular, so that the process that the future response reaches the set points is optimized by the model predictive control technique.

Referring to FIGS. 11 and 12, a control system may be configured based on the artificial neural network model 120, and a test platform system for a real-time control based on the model predictive control may be configured while ensuring the accuracy of the artificial neural network model 120.

The test platform system for the real-time control enables to control the fueling speed, the pressure ramp rate, and/or the pressure increase rate, to remain within an optimal range, by predicting the future filling results and comparing the future filling results with the actual measurement values. The constraints, a control time interval, and sensitivities may be separately set within the system logic.

Initially, the optimal control is achieved based on the real-time data from the hydrogen fueling station 200 and the hydrogen fueled mobility 300. However, when a certain event occurs during the operation of the system, the system may directly control the precooling temperature of the precooler 210 and a cooling system of the hydrogen fueled mobility 300 to enhance the overall efficiency of the hydrogen fueling process.

Referring to FIG. 12, the control process begins by receiving a SOC specified by a customer SOCₛₚ at time t=0 (S710). For example, the current SOC may be 50% and the SOC specified by a customer (SOCₛₚ) may be 85%.

A current instantaneous SOC, i.e., SOC(t), may be given as a function of the gaseous hydrogen temperature T_{gas}(t) and the gaseous hydrogen pressure P_{gas}(t), and a detailed representation of the function may be determined based on the general thermodynamic or dynamic model.

If the current SOC (SOC(t)) is greater than or equal to the specific SOC (SOCₛₚ) (S720), the hydrogen fueling procedure may be terminated. If the current SOC (SOC(t)) is smaller than the specific SOC (SOCₛₚ) (S720), an index (i) is set to i=t, and a moving horizon prediction involving the artificial neural network may be performed (S730).

The operation S730 may be performed by carrying out the model predictive control-based prediction using the artificial neural network 120 or the like. In operation S740, it may be determined whether the N predictions acquired in the operation S730 are predictions or control commands optimized or meeting an intended purpose or not.

If it is determined in the operation S740 that the N predictions are optimal predictions, a control command PRR(t) may be determined based on the N predictions and the control commands, and a control command PRR(t) may be applied to the dispenser 100 and the storage tank 310 (S750) .

Afterwards, time index (t) is increased, and new measurement values for the gaseous hydrogen temperature T_{gas}(t) and the gaseous hydrogen pressure P_{gas}(t) are acquired and transferred to the input of the operation S720.

If it is determined in the operation S730 that the N predictions acquired in the operation S730 are not optimal predictions, the operation S730 may be performed again to obtain new N predictions and control commands.

In the operation S730 shown in FIG. 12, pairs of state prediction values (T, P) satisfying the temperature limit and the pressure limit may be generated for arbitrary positive integers, i and k.

At the current time (i=t), N state prediction values and corresponding control commands may be derived.

The operation S740 shown in FIG. 12 may be understood as a process of searching for a set of N predictions that minimize the cost function indicating whether the final control target, SOCsp, has been reached.

The state measurement values output by the hydrogen fueled mobility 300 and including the temperature and pressure of the CHSS 310 may be provided to the artificial neural network model 120 as a feedback input.

The state measurement values output by the hydrogen fueling station 200 and including the temperature and pressure of precooled gaseous hydrogen may be provided to the artificial neural network model 120 as another feedback.

The artificial neural network model 120 may provide a predicted output to the hydrogen fueling control logic 110, and the supervisory system 130 may provide the artificial neural network model 120 with a future input acquired by the simulation or the model-based prediction through the module-A 140.

The control process based on the artificial neural network (ANN) and the model predictive control (MPC), which utilizes the simulation together with the actual measurement data, performs at least partially the simulation using the artificial neural network model 120 and uses the prediction result in the control process.

The present embodiment aims to configure an integrated control protocol for the hydrogen fueling based on real-time data, and the system may be implemented by utilizing various technical elements.

The protocol mounted on the dispenser 100 may receive the data of the precooled gaseous hydrogen from the hydrogen fueling station 200 and the data of the storage tank 310 from the hydrogen fueled mobility 300 as real-time input values, and may generate output data by the mounted model to control the filling speed, the pressure ramp rate (PRR), and/or the mass flow rate (m_dot).

When an event such as an external environmental change occurs, the integrated fueling control model in the dispenser 100 may directly control the precooling temperature of the hydrogen fueling station 200 and the cooling system of the hydrogen fueled mobility 300 to generally adjust the filling speed, the pressure ramp rate (PRR), and/or the mass flow rate (m_dot), and a process efficiency.

A precooling system or precooler 210 of the hydrogen fueling station 200 may include an independent cooling stabilization system separately to complement the control protocol.

In terms of temperature stabilization, the cooling stabilization system of the precooler 210 may be independently controlled, but a control target value thereof may be changed integrally by the protocol of the dispenser 100.

Additional functions related to the temperature stabilization may be given to the precooler 210 to improve the economic efficiency of the hydrogen fueling station 200 and complement the functions of the integrated control protocol.

The precooling temperature varies according to the initial temperature and flow rate of the gaseous hydrogen supplied to the precooler 210. To compensate for the variation, a new precooler structure to stabilize the temperature is proposed in an exemplary embodiment of the present disclosure.

The precooler 210 according to an exemplary embodiment of the present disclosure may include a control logic for a control of its own temperature and an interface with the protocol.

The storage tank 310 of the hydrogen fueled mobility 300 may include a forced cooling system, which may partially cool the compression heat generated during the hydrogen fueling and thus improve the filling speed. The fueling protocol may also be involved in the operation and control of the forced cooling system of the storage tank 310.

In an exemplary embodiment of the present disclosure, a temperature management function may be provided to the storage tank 310 of the hydrogen fueled mobility 300 to improve the hydrogen filling speed and to complement the function of the integrated control protocol.

In an exemplary embodiment of the present disclosure, the storage tank 310 of the hydrogen fueled mobility 300 may include a self-cooling system to increase the overall filling speed and enhance the safety of the hydrogen fueled mobility 300. The storage tank 310 may include a control logic for the operation thereof and an interface with the protocol.

The integrated control according to an exemplary embodiment of the present disclosure may improve the current fueling efficiency and facilitate the preparation for the next fueling procedure.

In a T40 station where the precooling temperature of the precooler 210 is set to -40°C, when the precooling temperature reached the target value but the outside temperature is higher than a preset value and the increasing rate of the temperature of the storage tank 310 side is larger than expected, a control signal or current state information may be transmitted to the hydrogen fueled mobility 300 or the storage tank 310 so that the self-cooling system of the storage tank 310 may be operated.

Contrarily, when the precooling temperature of the precooler 210 is set to -40°C but it is determined that the precooling is excessive taking into account the external environment and the actual data, the target value for the precooling temperature may be adjusted (to -35° C, for example).

When the target precooling temperature and the temperature of the storage tank 310 are required to be controlled additionally, the control information or the control commands may be transmitted from the dispenser 100 to both the hydrogen fueled mobility 300 and the hydrogen fueling station 200.

According to an exemplary embodiment of the present disclosure, the self-cooling systems of the hydrogen fueled mobility 300 and the hydrogen fueling station 200 may be controlled independently or may be controlled in response to a signal from the dispenser 100.

The integrated control method for the hydrogen fueling according to an exemplary embodiment may further include an operation of determining whether the current state measurement value satisfies the constraints.

The constraints may include a condition that the temperature and the pressure of the compressed hydrogen storage system (CHSS) in the hydrogen electric mobility do not exceed the temperature limit and the pressure limit, respectively.

An exemplary embodiment of the present disclosure allows to enhance the efficiency of the hydrogen fueling/supply process and improve the speed and the real-time operability of the hydrogen fueling/supply process while safely fueling/supplying the hydrogen fuel.

An exemplary embodiment of the present disclosure allows to implement a test method and a test platform enabling a precisely modeling of the hydrogen fueling/supply process based on real-time on-site dynamic data.

An exemplary embodiment of the present disclosure allows to implement a test method and a test platform enabling to provide a model capable of precisely controlling the hydrogen fueling/supply process by taking into account the difference between the result of modeling and simulation by a theoretical model and the real-time on-site data or both the result of the modeling and simulation and the real-time on-site data.

An exemplary embodiment of the present disclosure enables to implement a test method for a hydrogen fueling control ensuring the real-time operability based on a model predictive control (MPC).

An exemplary embodiment of the present disclosure enables to implement a test method for the hydrogen fueling control with an enhanced accuracy in a prediction of a hydrogen fueling result based on an artificial neural network (ANN) model.

After receiving the fueling amount (e.g. SOC) set directly by the user, the hydrogen may be fueled/supplied until the target amount is reached by the sequence shown in FIGS. 11 and 12 through the real-time communications and calculation-based control logic.

Various variables such as the SOC, target pressure, time, and temperature may be used to set the fueling amount, and the fueling speed may be controlled accordingly to enhance the efficiency.

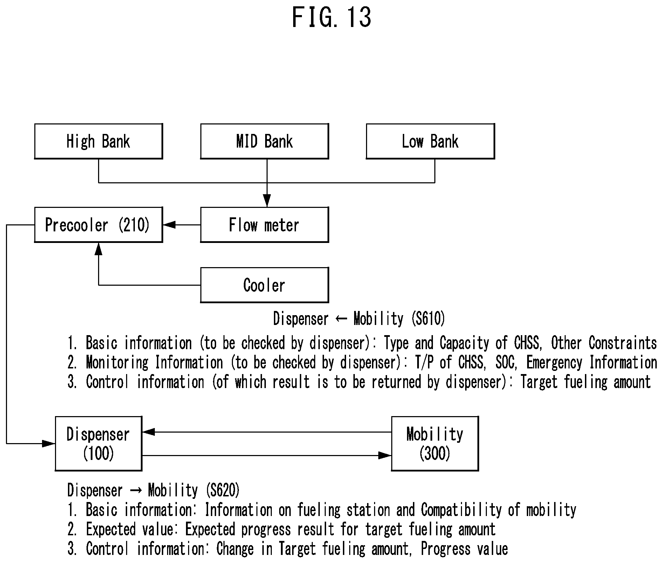

FIG. 13 is a conceptual diagram illustrating a bidirectional communication protocol for the hydrogen fueling process based on user-driven setting according to an exemplary embodiment of the present disclosure.

An example of communication data required for the real-time control is shown in FIG. 13.

A bidirectional communication process and protocol based on the target fueling amount set by the user is shown in FIG. 13.

Basic information to be checked by a counterpart, expected data according to suggested target amount, and the progress data may be exchanged between the hydrogen fueled mobility 300 and the dispenser 100 through the bidirectional communication.

Operation S610 shows information provided by the hydrogen fueled mobility 300 to the dispenser 100.

As basic information to be checked by the dispenser 100, the type and capacity of the CHSS and other constraints of the hydrogen fueled mobility 300 may be provided by the hydrogen fueled mobility 300 to the dispenser 100.

As monitoring information to be checked by the dispenser 100, the temperature (T)/pressure (P), SOC of the CHSS and emergency information in the hydrogen fueled mobility 300 may be provided by the hydrogen fueled mobility 300 to the dispenser 100.

As control information for which the dispenser 100 is to return a result value, the target fueling amount of the hydrogen fueled mobility 300 may be provided by the hydrogen fueled mobility 300 to the dispenser 100.

Operation S620 shows information provided by the dispenser 100 to the hydrogen fueled mobility 300.

As basic information, information on the fueling station 200 and availability and/or compatibility of the hydrogen fueled mobility 300 may be returned by the dispenser 100 to the hydrogen fueled mobility 300.

As an expected value, an expected progress result for the target fueling amount may be provided by the dispenser 100 to the hydrogen fueled mobility 300.

As control information, information on the change in the target fueling amount and the progress value of the fueling process may be provided by the dispenser 100 to the hydrogen fueled mobility 300.

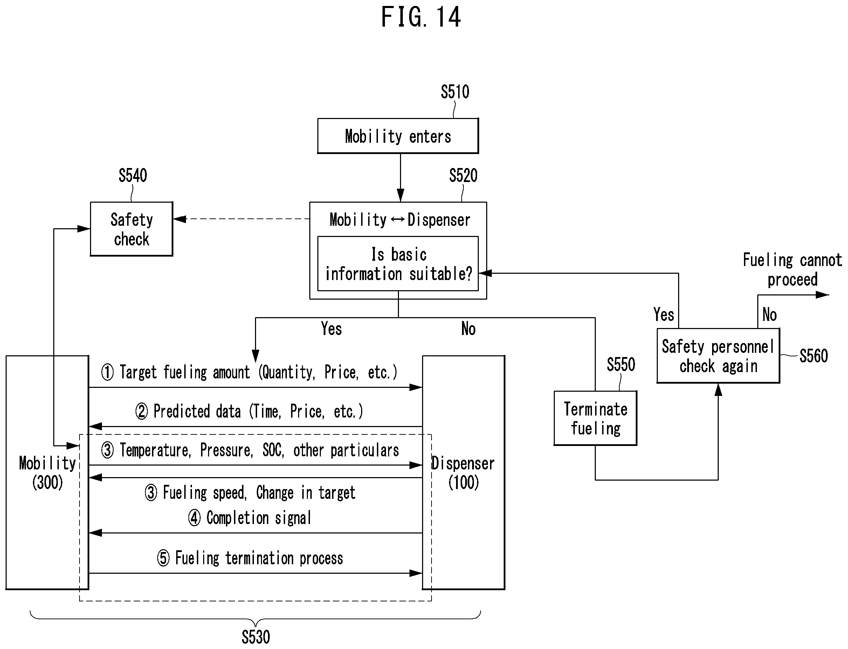

FIG. 14 is a conceptual diagram illustrating a communication protocol and operations for the hydrogen fueling process based on the user-driven setting according to an exemplary embodiment of the present disclosure.

Referring to FIG. 14, when a vehicle/mobility 300 enters the fueling station 200 (S510), it may be checked whether the basic information is suitable between the vehicle/mobility 300 and the dispenser 100 (S520).

If it is determined in the operation S520 that the basic information is suitable, the operation S530 may be performed through bidirectional communication between the vehicle/mobility 300 and the dispenser 100.

The vehicle/mobility 300 may provide the dispenser 100 with (1) the target fueling amount (quantity, fee, etc.).

The dispenser 100 may provide the vehicle/mobility 300 with (2) the predicted data (time, fee, etc.).

The vehicle/mobility 300 may provide the dispenser 100 with (3) the temperature, the pressure, and the SOC of the hydrogen tank in the vehicle/mobility 300, and other particulars in the vehicle/mobility 300.

In response to the information, the dispenser 100 may provide the vehicle/mobility 300 with (3) the fueling speed and the change in the target fueling amount for hydrogen fueling.

When the target SOC is reached as a result of the fueling, the dispenser 100 may provide the vehicle/mobility 300 with (4) a completion notification signal.

In response to the completion notification signal, the vehicle/mobility 300 may provide the dispenser 100 with (5) a request for a fueling termination procedure.

The sequences (3) through (5) may be performed in connection with a safety check process in operation S540. In addition, a check result of the operation S520 may also be transferred to the operation S540.

If it is determined in the operation S520 that the basic information is not suitable, the fueling process may be terminated (S550).

After the fueling process is terminated, a safety personnel may check the situation again (S560). In case where the safety personnel confirms the safety, it may be checked again in the operation S520 whether the basic information is suitable or not. In case that the safety is not confirmed by the safety personnel, however, it may be finally determined that the fueling cannot proceed.

A method of identifying/determining a hydrogen fueling protocol for fueling hydrogen to the hydrogen fueled mobility 300 based on user-driven setting according to an exemplary embodiment of the present disclosure may be performed by the hydrogen fueled mobility 300 within the operation S520. The method of identifying/determining the protocol according to an exemplary embodiment of the present disclosure may include: an operation of identifying/determining a fueling protocol supported by the dispenser 100 supplying hydrogen to the hydrogen fueled mobility 300 and/or the hydrogen fueled mobility 300 through communications with the dispenser 100; and an operation of determining whether an identified/determined fueling protocol supports a function or an interface of allowing a user to set a target SOC for fueling hydrogen to the hydrogen fueled mobility 300.

A method of identifying/determining a hydrogen fueling protocol for fueling hydrogen to the hydrogen fueled mobility based on user-driven setting according to another exemplary embodiment of the present disclosure may be performed by the dispenser 100 within the operation S520. The method of identifying/determining the protocol according to an exemplary embodiment of the present disclosure may include: an operation of identifying/determining a fueling protocol supported by the dispenser 100 supplying hydrogen to the hydrogen fueled mobility 300 and/or the hydrogen fueled mobility 300 through communications with the hydrogen fueled mobility 300; and an operation of determining whether an identified/determined fueling protocol supports the function or an interface of allowing the user to set the target SOC for fueling hydrogen to the hydrogen fueled mobility 300.

A method of negotiating a hydrogen fueling protocol for fueling hydrogen to the hydrogen fueled mobility 300 based on user-driven setting according to an exemplary embodiment of the present disclosure may be performed by the hydrogen fueled mobility 300 within the operation S520. The method of negotiating the protocol according to an exemplary embodiment of the present disclosure may include: an operation of identifying/determining at least one fueling protocol supported by the dispenser 100 supplying hydrogen to the hydrogen fueled mobility 300 and/or the hydrogen fueled mobility 300 through communications with the dispenser 100; and an operation of selecting/determining a fueling protocol supporting the function or the interface of allowing the user to set the target SOC for fueling hydrogen to the hydrogen fueled mobility 300, among the at least one fueling protocol, as a preferred fueling protocol and negotiating the preferred fueling protocol with the dispenser 100 through communications with the dispenser 100.

A method of negotiating a hydrogen fueling protocol for fueling hydrogen to the hydrogen fueled mobility based on user-driven setting according to another exemplary embodiment of the present disclosure may be performed by the dispenser 100 within the operation S520. The method of negotiating the protocol according to an exemplary embodiment of the present disclosure may include: an operation of identifying/determining at least one fueling protocol supported by the dispenser 100 supplying hydrogen to the hydrogen fueled mobility 300 and/or the hydrogen fueled mobility 300 through communications with the hydrogen fueled mobility 300; and an operation of selecting/determining a fueling protocol supporting the function or the interface of allowing the user to set the target SOC for fueling hydrogen to the hydrogen fueled mobility 300, among the at least one fueling protocol, as a preferred fueling protocol and negotiating the preferred fueling protocol with the hydrogen fueled mobility 300 through communications with the hydrogen fueled mobility 300.

In the operation S520, the dispenser 100 and the hydrogen fueled mobility 300 may exchange basic information through communications. At this time, the basic information may include information on whether each of the dispenser 100 and/or the hydrogen fueled mobility 300 supports the hydrogen fueling process based on user-set fueling amount.

The basic information may include the hydrogen fueling protocols supported by the hydrogen fueled mobility 300 and communication protocols related with the hydrogen fueling protocols. In addition, the basic information may include hydrogen fueling protocols supported by the dispenser 100 and communication protocols related with the hydrogen fueling protocols. Sharing of the basic information between the hydrogen fueled mobility 300 and the dispenser 100 enables to determine the interoperability of the hydrogen fueling protocols supported by the hydrogen fueled mobility 300 and the dispenser 100.

At this point, the criteria for selecting the fueling protocol between the hydrogen fueled mobility 300 and the dispenser 100 may include the interoperability and whether the protocol supports the hydrogen fueling process based on user-set fueling amount of the present disclosure.

In an exemplary embodiment of the present disclosure, it may be determined in the operation S520, based on the basic information, whether a fueling protocol satisfying a requirement regarding the interoperability among a plurality of hydrogen fueling protocols supports the hydrogen fueling process based on user-set fueling amount.

In another exemplary embodiment of the present disclosure, a fueling protocol negotiation process may be performed in the operation S520 based on the basic information, such that a fueling protocol supporting the hydrogen fueling process based on user-set fueling amount among a plurality of fueling protocols satisfying a requirement regarding the interoperability may be preferentially selected.

In an exemplary embodiment of the present disclosure, information on the fueling protocol supported by the hydrogen fueled mobility 300 may be forwarded to the dispenser 100 as the basic information, and the dispenser 100 may select the hydrogen fueling protocol supporting the interoperability and the hydrogen fueling process based on user-set fueling amount.

In another embodiment of the present disclosure, information on the fueling protocol supported by the dispenser 100 may be forwarded to the hydrogen fueled mobility 300 as the basic information through the bidirectional communication, and the hydrogen fueled mobility 300 may select the hydrogen fueling protocol supporting the interoperability and the hydrogen fueling process based on user-set fueling amount.

In another exemplary embodiment of the present disclosure, the information on the fueling protocols supported by the dispenser 100 and the hydrogen fueled mobility 300 may be shared as the basic information through the bidirectional communications, and a hydrogen fueling protocol supporting the interoperability and the hydrogen fueling process based on user-set fueling amount may be selected or determined through a negotiation between the dispenser 100 and the hydrogen fueled mobility 300.

In a user-driven setting-based hydrogen fueling method by the dispenser 100, the supervisory system 130, or the hydrogen fueled mobility 300 according to an exemplary embodiment of the present disclosure, if the user input transmitted in step S530 includes changes related to the hydrogen fueling target setting, the step of determining the target fueling rate can determine a new target fueling rate changed based on the changes.

The hydrogen fueling method based on user-set fueling amount performed by the dispenser 100, the supervisory system 130, or the hydrogen fueled mobility 300 according to an exemplary embodiment of the present disclosure may further include an operation of providing the hydrogen fueled mobility 300 with updated prediction data of the hydrogen fueling control sequence for reaching a new target SOC through the communications between the dispenser 100 and the hydrogen fueled mobility 300 in the operation S530.

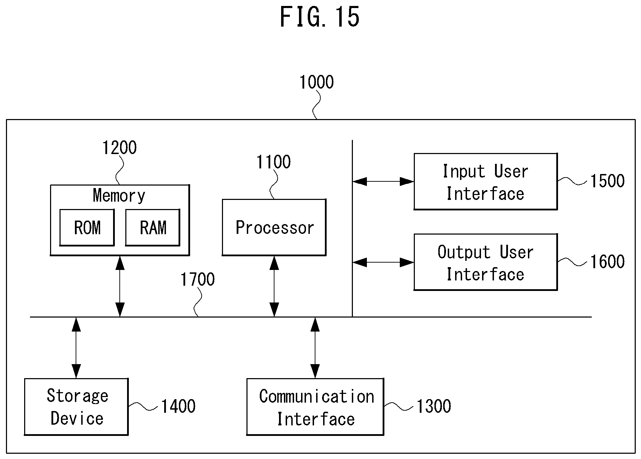

FIG. 15 is a block diagram showing a generalized configuration of a hydrogen fueling control apparatus, a hydrogen fueling control system, a hydrogen fueling test platform, a hydrogen fueling test system, or a computing system capable of performing at least a portion of the processes of FIGS. 1-14.

The controller or the supervisory system 130 controlling the hydrogen fueling test process may be disposed on the dispenser 100 side. The communication interface 140, 150, or 160 controlling the hydrogen fueling test process may be distributed in all or some of the dispenser 100, the hydrogen fueling station 200, or the hydrogen fueled mobility 300 to control at least some of the dispenser 100, the hydrogen fueling station 200, or the hydrogen fueled mobility 300.

The controller or the communication interface 130, 140, 150, or 160 constituting the hydrogen fueling test platform and/or the system may be implemented in a form of a computing system including a memory 1200 and a processor 1100 electronically connected to the memory 1200.

At least some processes of the hydrogen fueling process, the hydrogen fueling control method, and/or the test method according to an exemplary embodiment of the present disclosure may be performed by the computing system 1000 of FIG. 15.

Referring to FIG. 15, the computing system 1000 according to an exemplary embodiment of the present disclosure may include a processor 1100, a memory 1200, a communication interface 1300, a storage device 1400, an input interface 1500, and an output interface 1600, and a system bus 1700.

The computing system 1000 according to an exemplary embodiment of the present disclosure may include at least one processor 1100 and the memory 1200 storing program instructions instructing the at least one processor 1100 to perform at least one process step. At least some of the operations or process steps of the method according to an exemplary embodiment of the present disclosure may be performed by the at least one processor 1100 loading and executing the program instructions from the memory 1200.

The processor 1100, which executes the program instructions or commands stored in the memory 1200, may include a central processing unit (CPU) or a graphics processing unit (GPU) or may be implemented by another kind of dedicated processor suitable for performing the method of the present disclosure.

Each of the memory 1200 and the storage device 1400 may include one or more of a volatile storage medium or a non-volatile storage medium. For example, the memory 1200 may be comprised of one or more of a read only memory (ROM) and/or a random access memory (RAM).

Additionally, the computing system 1000 may include the communication interface 1300 that performs communications through a wireless communication network.

Additionally, the computing system 1000 may further include the storage device 1400, the input interface 1500, and the output interface 1600.

The components of the computing system 1000 may be connected to each other by the system bus 1700 to communicate with each other.

The computing system 1000 according to an exemplary embodiment of the present disclosure may be any data processing device capable of communications through a network such as a desktop computer, a laptop computer, a notebook PC, a smartphone, a tablet PC, a mobile phone, a smart watch, smart glasses, an e-book reader, a portable multimedia player (PMP), a portable game console, a navigation device, a digital camera, a digital multimedia broadcasting (DMB) player, a digital audio recorder, a digital audio player, a digital video recorder, a digital video player, and a personal digital assistant (PDA).

According to an exemplary embodiment of the present disclosure, a hydrogen fueling apparatus arranged or mounted on a hydrogen fueled mobility 300 to fuel hydrogen to the hydrogen fueled mobility 300 based on user-driven setting may include a memory 1200 storing at least one instruction and a processor 1100 executing the at least one instruction.

The processor 1100, by executing the at least one instruction, may receive the user input related to setting the hydrogen fueling target, determine the target fueling rate (SOC) for fueling hydrogen to the hydrogen fueled mobility 300 based on the user input, and enable/control the hydrogen fueled mobility to be supplied with hydrogen according to the hydrogen fueling control sequence for reaching the target SOC.

At this time, the user input may include the target SOC for the hydrogen fueling of the hydrogen fueled mobility 300. That is, the driver may directly determine the SOC in the hydrogen fueled mobility 300 or using a driving application software.

The processor 1100 may determine the target SOC based on one or more of the current SOC of the hydrogen fueled mobility 300 and/or the fueling-related situation information of the hydrogen fueled mobility 300 according to the user input. The hydrogen fueled mobility 300, instead of the dispenser 100 or the control system 130, may determine the final target SOC based on the fueling amount intended by the user input.

The processor 1100 may acquire or receive the progress data of the hydrogen fueling process for the hydrogen fueled mobility 300 during the hydrogen fueling process from the initial SOC to the target SOC.

The processor 1100 may transmit the progress data for the hydrogen fueled mobility 300 to the dispenser 100 or the fueling control system 130 supplying the hydrogen to the hydrogen fueled mobility 300 so that the progress data for the hydrogen fueled mobility 300 may be monitored.

At this time, data of the hydrogen fueled mobility 300 side may be shared between the hydrogen fueled mobility 300 and the dispenser 100 through real-time bidirectional communications to enable the monitoring of the fueling process.

The processor 1100 may generate a hydrogen fueling control request with respect to one or more intermediate SOCs between the initial SOC and the target SOC

The processor 1100 may request the hydrogen fueling based on relations between individual input and output pressures in a certain pressure range between a start point and an end point. Alternatively, the processor 1100 may request to derivate a protocol for fueling the hydrogen based on the relationship between individual input and output pressures.

A dispenser 100 for fueling hydrogen to a hydrogen fueled mobility 300 based on user-driven setting according to an exemplary embodiment of the present disclosure may include a memory 1200 storing at least one instruction and a processor 1100 executing the at least one instruction.

The processor 1100, by executing the at least one instruction, may receive the user input related to setting the hydrogen fueling target, determine the target fueling rate (SOC) for fueling hydrogen to the hydrogen fueled mobility 300 based on the user input, and provide the hydrogen fueling control sequence for reaching the target SOC.

The processor 1100 may acquire or receive the progress data of the hydrogen fueling process for the hydrogen fueled mobility 300 from the dispenser 100 supplying the hydrogen to the hydrogen fueled mobility 300 through the bidirectional communications during the hydrogen fueling process from the initial SOC to the target SOC

The processor 1100 may monitor the hydrogen fueling process based on a result of a comparison between the predicted data and the progress data from the initial SOC to the target SOC.

The device and method according to exemplary embodiments of the present disclosure can be implemented by computer-readable program codes or instructions stored on a computer-readable intangible recording medium. The computer-readable recording medium includes all types of recording device storing data which can be read by a computer system. The computer-readable recording medium may be distributed over computer systems connected through a network so that the computer-readable program or codes may be stored and executed in a distributed manner.

The computer-readable recording medium may include a hardware device specially configured to store and execute program instructions, such as a ROM, RAM, and flash memory. The program instructions may include not only machine language codes generated by a compiler, but also high-level language codes executable by a computer using an interpreter or the like.

Some aspects of the present disclosure described above in the context of the device may indicate corresponding descriptions of the method according to the present disclosure, and the blocks or devices may correspond to operations of the method or features of the operations. Similarly, some aspects described in the context of the method may be expressed by features of blocks, items, or devices corresponding thereto. Some or all of the operations of the method may be performed by use of a hardware device such as a microprocessor, a programmable computer, or electronic circuits, for example. In some exemplary embodiments, one or more of the most important operations of the method may be performed by such a device.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

## Claims

1. A method of fueling hydrogen to a hydrogen fueled mobility based on user-driven setting, comprising:
receiving a user input related to a hydrogen fueling target setting;
determining a target state of charge (SOC) for fueling hydrogen to the hydrogen fueled mobility based on the user input; and
controlling the hydrogen fueled mobility to be supplied with hydrogen according to a hydrogen fueling control sequence for reaching the target SOC.

2. The method of claim 1, wherein the user input comprises the target SOC for fueling hydrogen to the hydrogen fueled mobility.

3. The method of claim 1, wherein, in determining the target SOC, the target SOC is determined based on one or more of a current SOC of the hydrogen fueled mobility or fueling-related situation information of the hydrogen fueled mobility based on the user input.

4. The method of claim 1, further comprising:
acquiring or receiving progress data of a hydrogen fueling process for the hydrogen fueled mobility from an initial SOC to the target SOC; and
transmitting the progress data for the hydrogen fueled mobility to a dispenser or a fueling control system supplying hydrogen to the hydrogen fueled mobility so that the progress data for the hydrogen fueled mobility may be monitored.

5. The method of claim 1, further comprising:
generating a hydrogen fueling control request associated with at least one intermediate SOC between an initial SOC and the target SOC.

6. A method of fueling hydrogen to a hydrogen fueled mobility based on user-driven setting, comprising:
receiving a user input related to a hydrogen fueling target setting;
determining a target state of charge (SOC) for fueling hydrogen to the hydrogen fueled mobility based on the user input; and
providing a hydrogen fueling control sequence for reaching the target SOC.

7. The method of claim 6, wherein the user input comprises the target SOC for fueling hydrogen to the hydrogen fueled mobility.

8. The method of claim 6, wherein, in determining the target SOC, the target SOC is determined based on one or more of a current SOC of the hydrogen fueled mobility or fueling-related situation information of the hydrogen fueled mobility based on the user input.

9. The method of claim 6, wherein providing the hydrogen fueling control sequence for reaching the target SOC comprises:
determining a target hydrogen fueling control sequence corresponding to the target SOC from a group of hydrogen fueling control sequence candidates for reaching respective target SOCs.

10. The method of claim 6, wherein providing the hydrogen fueling control sequence for reaching the target SOC comprises:
predicting the hydrogen fueling control sequence for reaching the target SOC based on previous hydrogen fueling data between a dispenser supplying hydrogen to the hydrogen fueled mobility and the hydrogen fueled mobility.

11. The method of claim 6, wherein providing the hydrogen fueling control sequence for reaching the target SOC comprises:
generating a hydrogen fueling control command for fueling with respect to at least one intermediate SOC between the initial SOC and the target SOC.

12. The method of claim 11, wherein providing the hydrogen fueling control sequence for reaching the target SOC is performed using an artificial neural network configured to receive a first intermediate SOC among the at least one intermediate SOC and predict a hydrogen fueling control sequence for reaching a second intermediate SOC next to the first intermediate SOC.

13. The method of claim 12, wherein the artificial neural network is configured to receive the first intermediate SOC as input and generate a series of predicted future values of the hydrogen fueling control sequence for reaching the second intermediate SOC by means of a model predictive control technique.

14. The method of claim 11, wherein providing the hydrogen fueling control sequence for reaching the target SOC comprises:
providing the hydrogen fueling control sequence based on on-site data including relation data between the hydrogen fueling control command and a change in SOC during a process of reaching the target SOC from the initial SOC.

15. The method of claim 6, further comprising:
acquiring or receiving progress data of a hydrogen fueling process for the hydrogen fueled mobility from the dispenser supplying hydrogen to the hydrogen fueled mobility through bidirectional communications during the hydrogen fueling process from an initial SOC to the target SOC; and
monitoring the hydrogen fueling process based on a result of a comparison between predicted data and the progress data from the initial SOC to the target SOC.

16. The method of claim 6, further comprising:
determining, through a communication with the hydrogen fueled mobility, whether the hydrogen fueled mobility is capable of being supplied with hydrogen.

17. The method of claim 6, further comprising:
acquiring or receiving the target SOC through a communication with the hydrogen fueled mobility; and
providing the hydrogen fueled mobility with predicted data of the hydrogen fueling control sequence for reaching the target SOC.

18. The method of claim 6, wherein determining the target SOC for fueling hydrogen to the hydrogen fueled mobility comprises:
determining a new target SOC updated based on the user input including a change of information related to the hydrogen fueling target setting.

19. The method of claim 18, further comprising:
providing the hydrogen fueled mobility with predicted data for an updated hydrogen fueling control sequence for reaching the new target SOC through a communication with the hydrogen fueled mobility.

20. A hydrogen fueling apparatus arranged on a hydrogen fueled mobility to fuel hydrogen to the hydrogen fueled mobility based on user-driven setting, comprising:
a memory storing at least one program instruction; and
a processor executing the at least one program instruction,
wherein the processor is configured to:
receive a user input related to a hydrogen fueling target setting;
determine a target state of charge (SOC) for fueling hydrogen to the hydrogen fueled mobility based on the user input; and
control the hydrogen fueled mobility to be supplied with hydrogen according to a hydrogen fueling control sequence for reaching the target SOC.

21. The hydrogen fueling apparatus as claimed in claim 20, wherein the user input comprises the target SOC for fueling hydrogen to the hydrogen fueled mobility.

22. The hydrogen fueling apparatus as claimed in claim 20, wherein the processor is further configured to:
determine the target SOC based on one or more of a current SOC of the hydrogen fueled mobility or fueling-related situation information of the hydrogen fueled mobility based on the user input.

23. The hydrogen fueling apparatus as claimed in claim 20, wherein the processor is further configured to:
acquire or receive progress data of a hydrogen fueling process for the hydrogen fueled mobility from an initial SOC to the target SOC; and
transmit the progress data for the hydrogen fueled mobility to a dispenser or a fueling control system supplying hydrogen to the hydrogen fueled mobility so that the progress data for the hydrogen fueled mobility may be monitored.

24. The hydrogen fueling apparatus as claimed in claim 20, wherein the processor is further configured to:
generate a hydrogen fueling control request associated with at least one intermediate SOC between an initial SOC and the target SOC.

25. A dispenser apparatus fueling hydrogen to a hydrogen fueled mobility based on user-driven setting, comprising:
a memory storing at least one program instruction; and
a processor executing the at least one program instruction,
wherein the processor is configured to:
receive a user input related to a hydrogen fueling target setting;
determine a target state of charge (SOC) for fueling hydrogen to the hydrogen fueled mobility based on the user input; and
provide a hydrogen fueling control sequence for reaching the target SOC.

26. The dispenser apparatus as claimed in claim 25, wherein the processor is further configured to:
acquire or receive progress data of a hydrogen fueling process for the hydrogen fueled mobility from the dispenser apparatus supplying hydrogen to the hydrogen fueled mobility through bidirectional communications during the hydrogen fueling process from an initial SOC to the target SOC; and
monitor the hydrogen fueling process based on a result of a comparison between predicted data and the progress data from the initial SOC to the target SOC.

27. A method of determining a hydrogen fueling protocol for fueling hydrogen to a hydrogen fueled mobility based on user-driven setting, comprising:
determining a first fueling protocol supported between a dispenser supplying hydrogen to the hydrogen fueled mobility and the hydrogen fueled mobility using communications between the dispenser and the hydrogen fueled mobility; and
determining whether the first fueling protocol supports an interface for a user to set a target state of charge (SOC) for fueling hydrogen to the hydrogen fueled mobility.

28. A method of negotiating a hydrogen fueling protocol for fueling hydrogen to a hydrogen fueled mobility based on user-driven setting, comprising:
determining at least one fueling protocol supported by a dispenser supplying hydrogen to the hydrogen fueled mobility and the hydrogen fueled mobility using communications between the dispenser and the hydrogen fueled mobility; and
determining a fueling protocol supporting an interface for a user to set the target state of charge (SOC) for fueling hydrogen to the hydrogen fueled mobility, among the at least one fueling protocol, as a preferred fueling protocol for a protocol negotiation between the dispenser and the hydrogen fueled mobility using communications between the dispenser and the hydrogen fueled mobility.
